(19)

Europäisches
Patentamt
European
Patent Office
Office européen
des brevets

(11)     **EP 2 739 055 A1**

(12)                  **EUROPEAN PATENT APPLICATION**
                      published in accordance with Art. 153(4) EPC

(43) Date of publication:
**04.06.2014  Bulletin 2014/23**

(21) Application number: **12820698.4**

(22) Date of filing: **30.07.2012**

(51) Int Cl.:
*H04N 13/00* (2006.01)

(86) International application number:
**PCT/KR2012/006061**

(87) International publication number:
**WO 2013/019048 (07.02.2013 Gazette 2013/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.07.2011  US 201161512992 P**

(71) Applicant: **Samsung Electronics Co., Ltd.
Suwon-si, Gyeonggi-do, 443-742 (KR)**

(72) Inventors:
 • **KANG, Jae-eun
   Suwon-si
   Gyeonggi-do 441-737 (KR)**

 • **PARK, Jung-jin
   Seongnam-si
   Gyeonggi-do 463-779 (KR)**
 • **SEO, Je-hwan
   Daegu 706-790 (KR)**
 • **LEE, Seong-wook
   Suwon-si
   Gyeonggi-do 443-851 (KR)**
 • **HA, Tae-hyeun
   Suwon-si
   Gyeonggi-do 441-740 (KR)**

(74) Representative: **Bray, Richard Anthony
   Appleyard Lees
   15 Clare Road
   Halifax HX1 2HY (GB)**

(54)  **METHOD OF SYNCHRONIZING A DISPLAY DEVICE, METHOD OF SYNCHRONIZING AN
      EYEGLASS DEVICE, AND METHOD OF SYNCHRONIZING THE DISPLAY DEVICE WITH AN
      EYEGLASS DEVICE**

(57)      The present invention relates to a method of synchronizing a display device. The method of synchronizing the display device according to various embodiments of the present invention includes the steps of: receiving a message from an eyeglass device and confirming the eyeglass device that is to perform synchronization based on the received result; transmitting transmission timing information on a beacon packet having a control signal of the eyeglass device to the eyeglass device; and transmitting the beacon packet to the eyeglass device according to the transmission timing information.

FIG. 4

**Description**

**CROSS-REFERENCE TO RELATED APPLICATION**

This application is a National Stage of International Application No. PCT/KR2012/006061, filed on July 30, 2012, and claims priority from U.S. Provisional Application No. 61/512,992 filed on July 29, 2011, the disclosure of which is incorporated herein in its entirety by reference.

**FIELD OF THE INVENTION**

Methods and apparatuses consistent with exemplary embodiments relate to a method for synchronizing of a display device and an eyeglass device, and more particularly, to a method for synchronizing of a display device which performs Bluetooth synchronization, a method for synchronizing of an eyeglass device, and a method for synchronizing of a display device and an eyeglass device.

**BACKGROUND OF THE INVENTION**

**Dual-View Display and 3D Display**

With the development of digital technologies, various kinds of electronic apparatuses have been developed and distributed. In particular, various kinds of display apparatuses such as a television (TV), a mobile phone, a personal computer (PC), a notebook PC, a personal digital assistant (PDA), etc. are increasingly used in general households.
As the use of the display apparatuses increases, users' needs for more diverse functions increase. Accordingly, manufacturers of electronic apparatuses make great efforts to meet the users' needs and thus products with new functions that did not exist before are coming into the markets one after another.
In particular, there is a need for technology that enables many users to view contents that they want to view using a single display device. Also, 3-dimensional (3D) image display technology for giving a sense of depth to users has appeared to allow them to view more realistic images.
As one of the methods for allowing users to view a plurality of contents using a single display device or providing a 3D image, a method of displaying a plurality of image frames alternately is in the spotlight in recent years.
That is, a dual-view display device that can output image frames of a plurality of 2D contents alternately, or a 3D display device that outputs a left-eye image frame and a right-eye image frame of a 3D content alternately employs such a method.
In the case of the plurality of 2D contents, "displaying alternately" recited herein refers to a method that displays an image frame of a content A, which is one of the plurality of 2D contents, first, and then displays an image frame of another content B, that is, refers to displaying image frames of different contents alternately.
In the case of the 3D content, "displaying alternately" refers to a method that displays a left-eye image frame of the content first and then displays a right-eye image frame of the same content, that is, refers to displaying the left-eye and right-eye image frames of the same content alternately.
In the case of the former method, since a user who views a certain content should view that content only, an eyeglass device that is specially manufactured to allow light to pass therethrough only when an image frame of the corresponding content is displayed and allow the user to view the image is required. The open timing of left and right lenses of the eyeglass device is synchronized with the display timing of the image frame to be viewed. Accordingly, when the content A is displayed on the display device, the eyeglass device opens both the left lens and the right lens, and, when another content B is displayed, the eyeglass device closes both the left lens and the right lens. Since the image frames of different 2D contents are displayed alternately at very high speed and afterimages still remain on the user's retina when the lenses are closed, the image is seen as a natural images.
In the case of the latter case, since the user views independent images having a difference in depth through his/her left eye and right eye in order to view a 3D image providing a sense of depth, an eyeglass device that is specially manufactured to allow light to pass through only the left-eye lens when the left-eye image frame of the content is displayed and allow the user to view the image through only his/her left eye is required. Likewise, the eyeglass device allows light to pass only through the right-eye lens when the right-eye image frame of the content is displayed, and allows the user to view the image through his/her right eye. The right-eye image frame and the left-eye image frame have a constant visual difference therebetween and are displayed alternately at very high speed, and an afterimage effect still remains while the lenses are closed. Therefore, the image is seen as a natural 3D image.
The above-described eyeglass device is called shutter glasses because it has a shutter to open and close lenses according to the display timing.
However, since such shutter glasses should open or close the shutter with specific timing, the glasses are required to determine shutter driving timing in synchronization with the display device and maintain it.

As one of the methods to achieve this, Bluetooth communication technology may be used. The Bluetooth communication technology refers to a short-range wireless communication method that transmits a data stream in the form of a data packet using 2402~2480 MHz **except for 2MHz after 2400MHz and 35MHz before 2483.5MHz,** 79 channels in total.

## Requirements or Problems of Bluetooth Pairing Method

However, the Bluetooth communication technology for synchronizing the display device and the eyeglass device has the following requirements or problems:

Firstly, a salve device should have a sufficient power source.

The Bluetooth pairing process generally starts by a master device transmitting an inquiry message and a slave device scanning the inquiry message and responding to it. Since the salve device should search all channels through which the inquiry message is transmitted to scan a target to be paired, it consumes much power and thus should have a sufficient power source.

Secondly, when the eyeglass device is the slave device, the eyeglass device should be equipped with a function of selecting one of the searched plurality of display devices.

There may be a plurality of display devices that are to be paired with a single eyeglass device, and the eyeglass device may be paired with one of the plurality of display devices. Accordingly, when the eyeglass device is the slave device, the eyeglass device could select one of the plurality of display devices. However, when the eyeglass device has an interface to select a target to be paired, the interface may cause a manufacturing cost to rise. Also, since the target to be connected with the eyeglass device is a display device located nearby realistically, the configuration to select the display device through the interface is unnecessary in most cases and rather may delay the pairing time.

Thirdly, the eyeglass devices is not required to be paired with a device other than the display device.

Since the eyeglass device is used only for viewing the image output from the display device, it is not required to perform Bluetooth pairing with the other devices. However, according to the existing Bluetooth communication standards, the eyeglass device tries to be paired with all devices using the Bluetooth channels. Accordingly, the eyeglass device unnecessarily wastes time when performing pairing. In particular, when the eyeglass device is a slave device, the user should select a display device to be paired from among various devices. However, an interface is not required for the eyeglass device as described above.

Fourthly, the eyeglass device is not required to transmit data to the display device.

The eyeglass device just operates in synchronization with the display timing of the image frame of the display and is not required to transmit data to the display device. Accordingly, it is not necessary to establish a separate data link between the display device and each eyeglass device according to the Bluetooth communication standards. That is, bi-directional communication is not required between the eyeglass device and the display device unlike general Bluetooth pairing.

## SUMMARY

One or more exemplary embodiments provide a method for synchronizing of a display device, a method for synchronizing of an eyeglass device, and a method for synchronizing of a display device and an eyeglass device, which are based on effective and rapid Bluetooth.

According to an aspect of an exemplary embodiment, there is provided a method for synchronizing of a display device, the method including: receiving a message from an eyeglass device and confirming the eyeglass device that is to perform synchronization based on a result of the receiving; transmitting transmission timing information of a beacon packet comprising a control signal of the eyeglass device to the eyeglass device; and transmitting the beacon packet to the eyeglass device according to the transmission timing information.

The confirming the eyeglass device may include: receiving an inquiry message from the eyeglass device; listening to the inquiry message and transmitting an extended inquiry response (EIR) packet comprising a path loss threshold value; receiving an association notification packet requesting association from the eyeglass device based on a path loss value; and transmitting a baseband acknowledgement (ACK) to the eyeglass device in response to the association notification packet.

The EIR packet may include information of at least one of length-manufacturer specific, manufacturer specific, fixed ID, multicast capable, reserved, sending beacon, showroom mode, reserved remote pairable mode, test mode for Bluetooth qualification body test, path loss threshold value, length-TX power, TX power level, and TX power value.

The path loss value may be a difference between the TX power value and a received signal strength indicator (RSSI) value of the EIR.

The association notification packet may include information of at least one of glasses Bluetooth device (BD) address, device type, reserved, glasses version no., battery type, remaining battery voltage, battery charging status, remaining battery ratio, remaining battery time, and color shift.

The transmitting the transmission timing information of the beacon packet may include: transmitting a reconnect train packet comprising the transmission timing information of the beacon packet to the eyeglass device; and when the eyeglass device does not find the reconnect train packet within a predetermined time, receiving a page packet from the eyeglass device.

The reconnect train packet may be transmitted at a predetermined frequency and at predetermined time intervals without frequency hopping.

When the page packet is received, the reconnect train packet may be transmitted to the eyeglass device again.

The reconnect train packet may include information of at least one of current BT clock, next beacon clock, AFH channel map, display BD address, beacon interval, and display ID.

The beacon packet may include information of at least one of BT clock at rising edge of frame sync, reserved, dual-view mode, BT clock phase at rising edge of frame sync, left shutter open offset (or) video stream 1 in dual-view mode, left shutter close offset (or) video stream 1 in dual-view mode, right shutter open offset (or) video stream 2 in dual-view mode, right shutter close offset (or) video stream 2 in dual-view mode, and frame sync period (integer)/frame sync period (fraction).

According to an aspect of another exemplary embodiment, there is provided a method for synchronizing of an eyeglass device, the method including: searching a display device to be synchronized and confirming the display device that is to perform synchronization according to a result of the searching; receiving transmission timing information of a beacon packet comprising a control signal of the eyeglass device from the display device; and receiving the beacon packet from the display device according to the transmission timing information.

The confirming the display device may include: transmitting an inquiry message to the display device; receiving an EIR packet comprising a path loss threshold value from the display device in response to the inquiry message'; transmitting an association notification packet requesting association with the display device to the display device according to a path loss value; and receiving a baseband ACK from the display device in response to the association notification packet.

The transmitting the association notification packet may include, only when the path loss value is less than the path loss threshold value, transmitting the association notification packet.

According to an aspect of still another exemplary embodiment, there is provide a method for synchronizing of a display device and an eyeglass device, the method including: searching, by the eyeglass device, a display device to be synchronized, and associating with the searched display device; transmitting, by the display device, transmission timing information of a beacon packet comprising a control signal of the eyeglass device to the eyeglass device; and transmitting, by the display device, the beacon packet to the eyeglass device according to the transmission timing.

According to various exemplary embodiments, a method for synchronizing of a display device, a method for synchronizing of an eyeglass device, and a method for synchronizing of a display device and an eyeglass device, which are based on effective and rapid Bluetooth, are provided.

## BRIEF DESCRIPTION OF THE DRAWINGS

The above and/or other aspects of the invention will become and more readily appreciated from the following description of the exemplary embodiments, taken in conjunction with the accompanying drawings of which:

FIG. 1 is a view illustrating a general system 1000 for viewing a 3D image;

FIG. 2 is a view schematically illustrating an operation of 3D active shutter glasses;

FIG. 3 is a high-dimensional system block diagram of a 3D viewing system which is the same as implemented by a 3D display and a 3DG device;

FIG. 4 is an upper level sequencer diagram showing a method of establishing Bluetooth connection;

FIG. 5 is a flowchart illustrating the sequence diagram of FIG. 4;

FIG. 6 is a flowchart illustrating the synchronization method of FIG. 5 from the perspective of a display device;

FIG. 7 is a flowchart illustrating the synchronization method of FIG. 5 from the perspective of an eyeglass device;

FIG. 8 is a sequence diagram illustrating an association process;

FIG. 9 is a flowchart illustrating a synchronization method of a display device including the sequence diagram of FIG. 8;

FIG. 10 is a flowchart illustrating a synchronization method of a display device further including a process of determining a condition for receiving an association notification packet in FIG. 9;

FIG. 11 is a flowchart illustrating a synchronization method of an eyeglass device further including an association notification process which is represented as a sequence diagram in FIG. 8;

FIG. 12 is a view illustrating an air format of an EIR payload;

FIG. 13 is a view illustrating an air format of an association notification payload;

FIG. 14 is a view illustrating a color shift field format;

FIG. 15 is a sequence diagram illustrating an operation of a 3DG device 200 to perform synchronization with a 3D display device 100 using a beacon;

FIG. 16 is a flowchart illustrating a method for synchronizing of a display device, including a process of establishing synchronization illustrated in FIG. 15;

FIG. 17 is a view illustrating a format of a reconnect train payload;

FIG. 18 is a view illustrating a timing sequence of a 3D synchronization operation;

FIG. 19 is a view illustrating an air format of a beacon payload;

FIG. 20 is a view illustrating shutter on/close timing;

FIG. 21 is a view illustrating a normal 3D mode;

FIG. 22 is a view illustrating a dual-view mode;

FIG. 23 is a flowchart illustrating association cases;

FIG. 24 is a view illustrating a state transition of 3D glasses;

FIG. 25 is a view illustrating an optical timing condition of a cinema;

FIG. 26 is a view illustrating arrangements of equipments for measuring;

FIG. 27 is a view illustrating arrangements of equipments for measuring;

FIG. 28 is a view illustrating arrangements of equipments for measuring;

FIG. 29 is a view illustrating arrangements of equipments for measuring;

FIG. 30 is a view illustrating arrangements of equipments for measuring;

FIG. 31 is a view illustrating arrangements of equipments for measuring.

## DETAILED DESCRIPTION OF EXEMPLARY EMBODIMENTS OF THE INVENTION

Reference will now be made in detail to the present exemplary embodiments of the present invention, examples of which are illustrated in the accompanying drawings, wherein like reference numerals refer to the like elements throughout. The exemplary embodiments are described below in order to explain the present invention by referring to the figures.

**Section 0. Definitions, Abbreviations, and Normative References**

The definitions, abbreviations, and normative references of terms used in the present specification will be explained briefly.

**0.1. Definitions**

2D Mode

The 2D mode is a mode in which a left shutter and a right shutter are continuously opened.

3D display or 3D display device

The 3D display or the 3D display device is a display device for viewing a 3D image which may be applied to 3D glasses defined in the present specification, and includes a 3D TV display and a 3D PC display. The display device, the 3D display device, and the 3D display are regarded as the same term and are interchangeably used in the present specification. The 3D display device recited herein may perform the same function as that of a dual-view display device.

3D glasses

The 3D glasses are glasses for viewing a 3D image, including an RF transceiver and a pair of shutters. The 3D glasses, the 3DG, and the glasses device are regarded as the same term and are interchangeably used in the present specification.

3D mode

The 3D mode is a mode for viewing a 3D image. In the 3D mode, a left shutter and a right shutter are opened and closed alternately and a user receives light with his/her one eye within a given time.

Close or Closed state

This state is a state in which an LC shutter is in an opaque state.

Dual View Mode

This mode is a mode in which a left shutter and a right shutter are opened and closed simultaneously.

Frame

The frame is one of a plurality of still photos that are displayed in sequence to reproduce a video or a movie or are projected at a predetermined frequency.

Frame Frequency

The frame frequency is a frequency at which 2D images are generated on a 3D display and is two times longer than an operational frequency of compatible 3D glasses.

Frame Sync

The frame sync is a signal indicating timing of a left frame and a right frame. A rising edge and a falling edge of the frame sync indicate start points of a left frame and a right frame, respectively.

Frame Sync Period (Fraction)

The frame sync period (fraction) indicates a fractional portion of a time interval between frame syncs.

Frame Sync Period (Integer)

The frame sync period (integer) indicates an integer portion of a time interval between frame syncs.

Left Frame

The left frame is a frame for the left eye.

Left Shutter

The left shutter is a shutter for the left eye.

Mode

The mode indicates a specific shutter operation.

Open or Open State

This state refers to a transparent state of the LC shutter.

Operational Frequency

The operational frequency is a shutter open frequency.

Protocol

The protocol is a set of rules for RF communications between the 3D display and the 3D glasses to control the operation of the shutters of the 3D glasses.

RF transceiver

The RF transceiver is an apparatus for transmitting or receiving shutter control information or information of other objects defined in the specification.

Right Frame

The right frame is a frame for the right eye.

Right Shutter

The right shutter is a shutter for the right eye.

Shutter Duty Cycle

The shutter duty cycle is a ratio of an open state period of a total period of the open state and the close state (open state period/open+on state period).

Shutter Operation

The shutter operation includes an on state and an off state.

Shutter or Shutter Device

The shutter or the shutter device is an active shutter cell that is one of a pair installed in the 3D glasses.

**0.2. Abbreviations**

Table 1 shows abbreviations used in the present specification.

[Table 1]

| Abbreviation | Meaning |
| --- | --- |
| 3D | Three-dimensional, stereoscopic |
| 3DTV | Television Display for 3D |
| 3DG | 3D Glasses |
| BT | Bluetooth |
| FHD3DI | Full HD 3D Glasses Initiative |
| LC | Liquid crystal |
| LED | Light emitting diode |
| PC | Personal computer |
| TV | Television |

**0.3. Normative References**

- ISO 11664-1:2007 Colorimetry - Part 1: CIE standard colorimetric observers
- Bluetooth Core Specification Ver.2.1 or later
- VESA Standard Connector and Signal Standards for Stereoscopic Display Hardware, Ver. 1

**Section 1. General**

**1. Scope**

The present specification describes electro-optic features of active shutter glasses for viewing a 3D image, which are known as full HD 3D glasses initiative glasses or 3D glasses (hereinafter, referred to as 3DG). Such 3DG are able to exchange information with a TV display, a PC display, a projector, or a cinema equipped with an XPAND 3D system (hereinafter, referred to as a 3D display).

The present specification describes signals that are transmitted between the 3DG and the 3D display. Such signals enable a user to view a 3D image through the full HD 3D glasses initiative glasses by means of 3D image and timing synchronizing means.

The present specification describes a condition for conforming, an environment in which the 3DG are tested and operated, electro-optic features of the 3DG that exchange electro-optic information with the 3D display device, active shutter features that are required by the 3DG, and protocols that are used between the 3DG and the 3D display.

**2. General Explanation of 3D Active-Shutter Glasses**

There are many techniques that record or reproduce a video image in a method of enabling a user to feel a sense of depth of a resulting image and recognize the image as a 3D image. Since such techniques are performed by transmitting a plurality of video image streams to user's left eye and right eye, they are called stereoscopy.

Most of the stereoscopic 3D systems insert images from each eye into a single stream, thereby displaying an image from both the left video image stream and the right video image stream on a single display.

Therefore, the stereoscopic 3D systems are distinguished from one another in how each system transmits the left image to the left eye and the right image to the right eye. When a user wears a kind of specialized glasses, these systems generally enable the user to view a 3D video media at a point where the glasses send an exact image to each eye.

There are external systems for use in a commercial cinema. However, most of the general stereoscopic 3DG used as a home appliance consist of a liquid crystal shutter mechanism for each eye. Each lens is electronically controlled to allow light to pass therethrough only when an intended image for the eye behind the shutter is displayed on the screen.

Such a kind of shutter system has an advantage of operating along with most kinds of displays. That is, the display may support a sufficiently high frame refresh rate without suffering from flickering. The minimum frame refresh rate for displaying a stereoscopic image without noticeable flickering should be two times higher than the minimum frame refresh rate that is generally need for displaying a non-stereoscopic image without flicking.

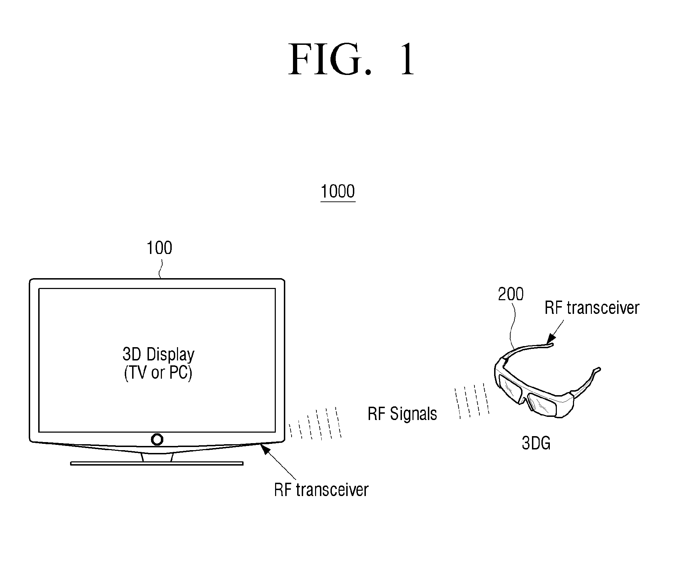

FIG. 1 is a view illustrating a general system 1000 for viewing a 3D image.

The system 1000 includes two sub systems, a 3D display 100 having an RF transceiver and 3DG 200 having an RF transceiver too.

In the 3D image viewing system, the 3D display 100 shows a left-eye image and a right-eye image alternately. The 3DG 200 include a pair of shutters to enable a user to view a 3D image through his/her left eye and right eye. An LC device or an equivalent device is used for the shutters. When the 3D display 100 performs synchronization with a sequence of an image, the RF transceiver transmits a set of information that is determined by an RF communication protocol. The 3DG 200 includes an electronic circuit including the RF transceiver and is synchronized with the 3D display 100 to control penetration of light of the two shutters. When the 3DG 200 receive an RF signal, the shutters are operated to provide the image of the 3D display 100 to the user 3-dimensionally.

The 3DG protocol is defined as having the following concepts:

- The 3DG protocol should be able to control on/off timing of the shutters in order for the 3DG 200 to operate with any kind of 3D display 100.

- The 3DG protocol should be common to different kinds of 3DG or 3DG having shutters of different features.

- The 3DG protocol should minimize an effect on a hardware design of the 3DG 200 and/or the RF transceiver.

**2.1. Operation Overview of 3D Active Shutter Glasses**

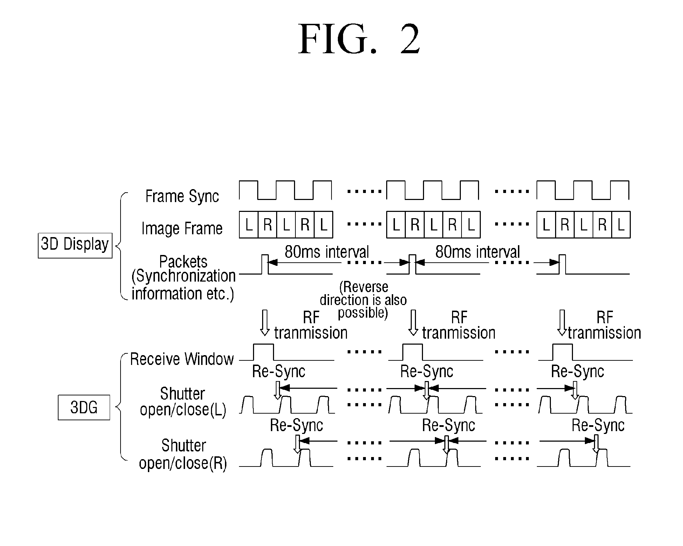

FIG. 2 is a view illustrating an operation overview of 3D active shutter glasses.

The shutter operation of the 3DG 200 is controlled based on information that is transmitted from the 3D display device 100 shown in FIG. 2. 3D images for the left eye and right eye are alternately displayed on the 3D display device 100. A set of information related to synchronization is transmitted from the 3D display device 100 to the 3DG 200 in the form of an RF packet. Such information includes information on a frame frequency and information on on/off timing of the left shutter and the right shutter, and is transmitted at time intervals according to an RF communication schema in order to reduce power consumption. The 3DG 200 receive the information, demodulate the RF signal, extract the synchronization information, and re-synchronize the frame frequency of the 3D display device 100 with the operation of the left shutter and the right shutter. During a time interval in which there is no synchronization information, the 3DG 200 controls the shutters while maintaining lastly received frame frequency.

**3. Main Parameters**

Table 2 briefly shows the main parameters used in the present specification.

A detailed explanation of each parameter will be provided in relevant portions.

[Table 2]

| Device | Parameters | Applicable Values | Unit | See |
|---|---|---|---|---|
| RF Transceiver | Parameters with regard to RF communication | Value complying with Bluetooth Specification | - | Section 2 |
| Shutter | Operating Frequency | 48, 50, 60 and 72 for TV72 for Cinema | Hz | Section 3 |
| | Contrast Ratio | 300:1500:1 (Recommended) | - | |

**4. Conventions and notations**

**4.1. Representation of numbers**

A measured value is rounded off to a least significant digit of a specified value. For example, when the specified value is 1.26, a positive coverage error is +0.01, and a negative coverage error is -0.02, the measured value ranges from 1.235 to 1.275.

When the specified value is given like x units max or x units min, the measured value is not rounded off prior to being compared with the specified value. Parameters given in this way shall not exceed the specified limits set by the exact value of x.

Numbers in decimal notations are represented by the digits 0 to 9. The decimal symbol is "." (dot).

In the case of hexadecimal notation, the numbers may be represented by 0-9 and A-F and "Ox" may be prefixed to the number. The letter "x" in the hexadecimal notation represents one of 0-9 and A-F.

A binary expression and a bit pattern may be represented by a string of numbers 0 and 1. Bit (n-1) of an n bit pattern may be the most significant bit (MSB), and bit [0] may be the least significant bit (LSB). Bit [0] may be transmitted first.

### 4.2. Names

The names of entities, e.g. specific devices, signals, etc. are written with an initial capital letter.

### 5. General Requirements

### 5.1. Environments

### 5.1.1. Test Environment

The test environment is a set of specifications on the air surrounding the 3DG 200 to be tested, and may have the following attributes:

Temperature: 25.0°C±3.0°C

Relative humidity: 45% to 75%

The 3DG 200 may be tested without strong interference by other electronic devices operating at a bandwidth of 2.4GHz, such as a microwave oven or a wireless LAN device. The humidity for the 3DG 200 may not be considered. All tests and measurements are performed under such a test environment unless otherwise stated.

### 5.1.2. Operating Environment

The 3DG 200 is used indoors without strong interference by other electronic devices operating at a bandwidth of 2.4GHz, such as a microwave oven and a wireless LAN device. Also, there should be no condensation of moisture during the operation of the 3DG.

### Section 2. Radio Transport Specification

### 6. Bluetooth System Requirement

This section provides a detailed description of a mechanism for synchronizing 3D active shutter glasses on a 3D video program which is displayed on the 3D display device 100. The synchronization information is transmitted using a Bluetooth wireless technique.

### 6.1. System Overview

This specification describes a mechanism to utilize Bluetooth wireless technology to provide the synchronization. Bluetooth technology addresses many of the issues surrounding the use of wired and infrared systems, and also leverages the fact that Bluetooth devices are being built in to televisions and other electronics for a variety of other purposes such as supporting a Bluetooth remote control, streaming stereo audio to headsets or speakers, transferring pictures, supporting home automation, etc.

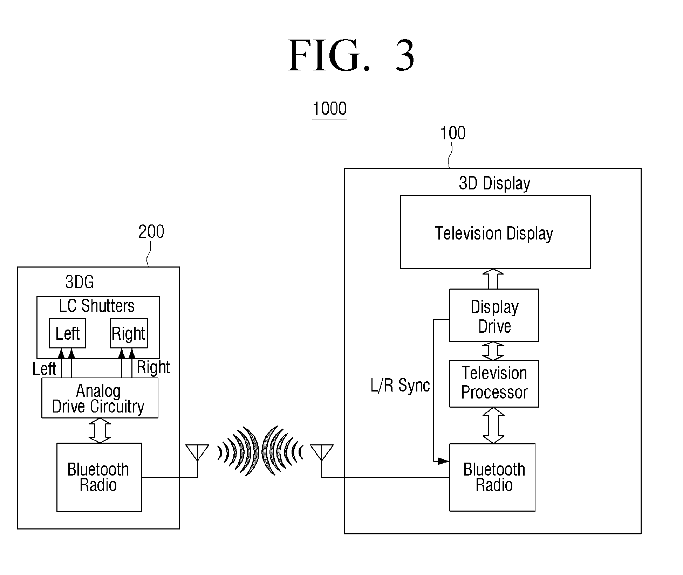

FIG. 3 is a high-dimensional system block diagram of a 3D viewing system which is the same as that implemented by the 3D display device 100 and the 3DG device 200.

The system includes the 3D display device 100 and a predetermined number of 3DG devices 200. A display driver of the 3D display device 100 controls a display including a liquid crystal display (LCD), a light emitting diode (LED) (for example, an organic LED (OLED)), a plasma display panel (PDP), or a digital light processing (DLP). The 3D display generally includes a processor that can operate a Bluetooth host (The processor may be HCI, L2CAP, SDP, or other profiles supported. The definition of HCI, L2CAP, and SPD will be provided in the Bluetooth specification).

In the present specification, the 3DG device 200 is connected with the compatible 3D display device 100 through Bluetooth. The setup and synchronization information is transmitted to the Bluetooth 3DG device 200 through the Bluetooth link. A Bluetooth device installed in the 3D display device 100 will capture a timing of a relative L/R sync signal (that is, a frame sync) regarding a local Bluetooth clock. The Bluetooth device transmits timing information relative to the Bluetooth clock of the 3D display device 100 to a Bluetooth device of the 3DG device 100 in order to generate an appropriate signal for controlling an LC shutter related to the Bluetooth clock of the 3DG device 200.

**6.2. Bluetooth Procedure**

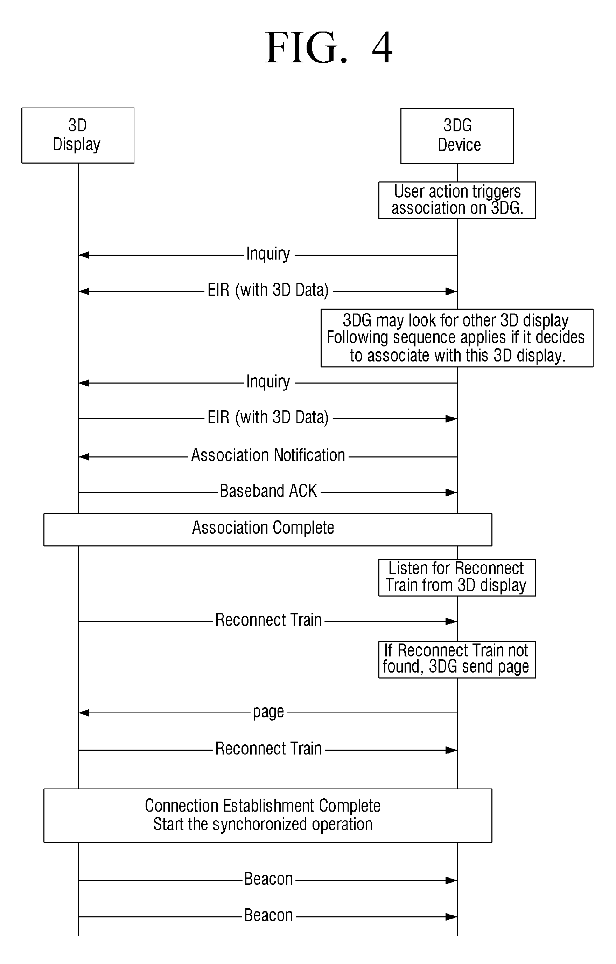

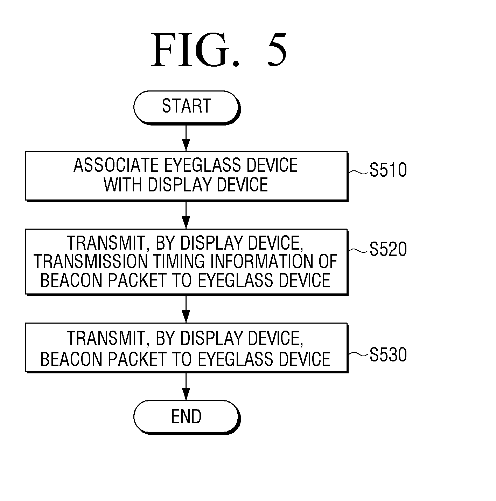

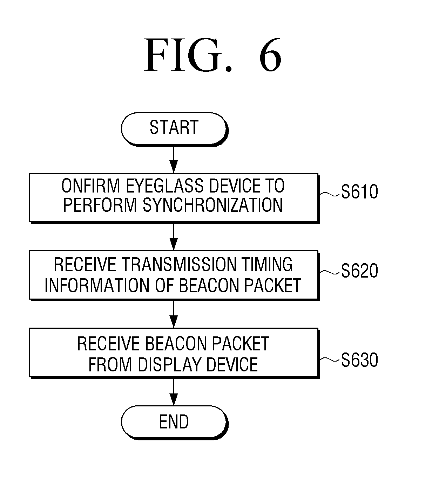

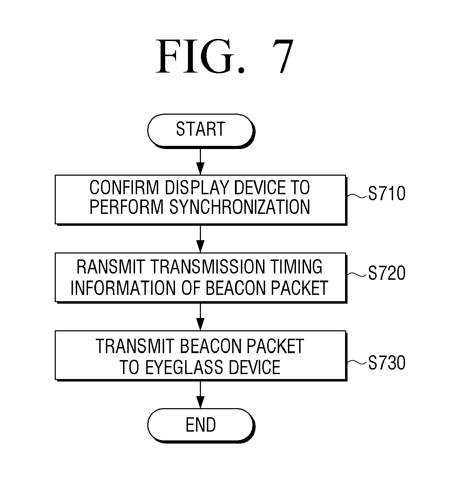

FIG. 4 is an upper level sequencer diagram showing a method for establishing Bluetooth connection, FIG. 5 is a flowchart of the sequence diagram of FIG. 4, FIG. 6 is a flowchart illustrating the synchronization method of FIG. 5 from the perspective of the display device, and FIG. 7 is a flowchart illustrating the synchronization method of FIG. 5 from the perspective of the eyeglass device.

Hereinafter, interaction between the 3D display device 100 and the 3DG device 200 will be explained. There are three main operations.

Referring to FIGS. 4 and 5, a method for synchronizing the display device 100 and the eyeglass device includes: searching, by the eyeglass device, the display device 100 to be synchronized, and associating with the searched display device (S510); transmitting, by the display device 100, transmission timing information of a beacon packet including a control signal of the eyeglass device to the eyeglass device (S520); and transmitting, by the display device 100, the beacon packet to the eyeglass device according to the transmission timing (S530). In addition, the method further includes performing, by the 3DG device 200, synchronization according to the transmitted beacon packet.

Referring to FIG. 6, a synchronization method of the display device 100 includes: receiving a message from the eyeglass device and confirming the eyeglass device to perform synchronization based on a result of the receiving (S610); transmitting transmission timing information of a beacon packet including a control signal of the eyeglass device to the eyeglass device (S620); and transmitting the beacon packet to the eyeglass device according to the transmission timing information (S630).

Also, referring to FIG. 7, a synchronization method of the eyeglass device includes: searching the display device 100 to be synchronized and confirming the display device 100 to perform synchronization according to a result of the searching (S710); receiving transmission timing information of a beacon packet including a control signal of the eyeglass device from the display device 100 (S720); and receiving the beacon packet from the display device 100 according to the transmission timing information (S730).

Operations S510, S610, and S710 are the substantially same operations and are described according to respective information processing entities. Operations S520, S620, and S720 are the substantially same operations and are described according to respective information processing entities. The same is applied to operations S530, S630, and S730.

Each operation will be explained below.

**6.2.1. Association**

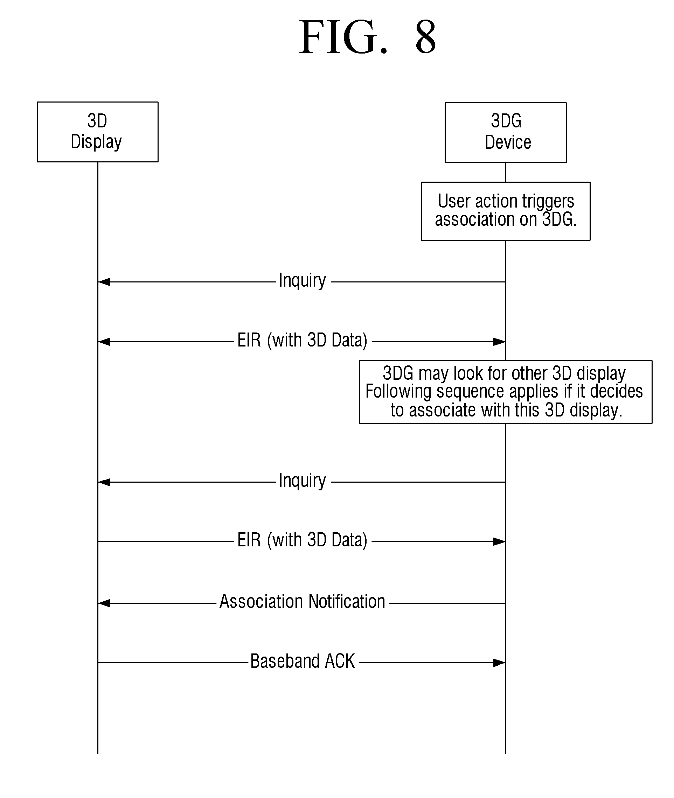

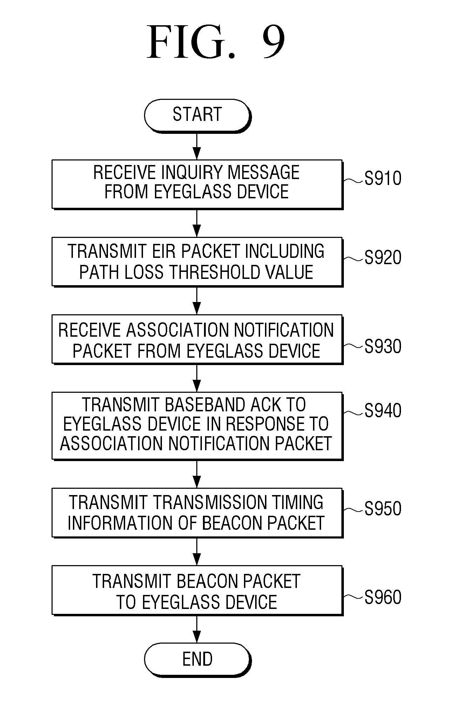

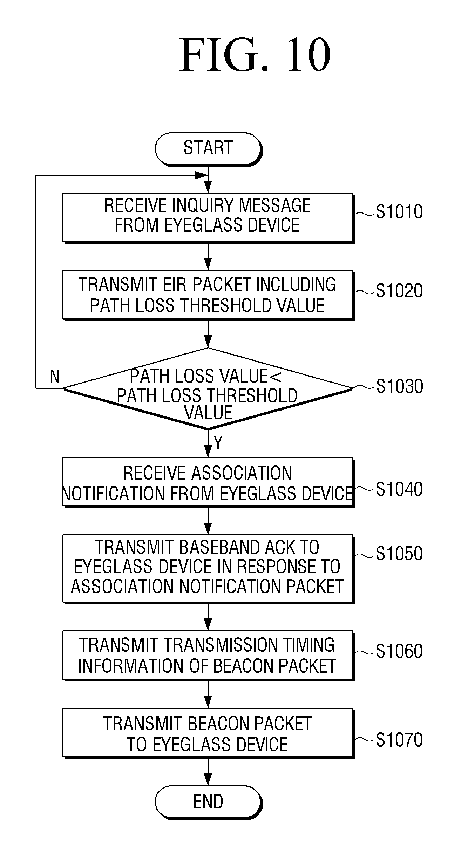

FIG. 8 is a sequence diagram illustrating an association process, FIG. 9 is a flowchart illustrating a synchronization method of the display device 100, including the sequence diagram of FIG. 8, and FIG. 10 is a flowchart illustrating a synchronization method of the display device 100, further including a process of determining a condition for receiving an association notification packet in FIG. 9.

Referring to FIGS. 8 and 9, the association process includes receiving an inquiry message (S910), transmitting an EIR packet (S920), receiving an association notification packet (S930), and transmitting a baseband acknowledgement (S940).

At operation of receiving the inquiry message (S910), the 3DG device 200 transmits the inquiry message to the display device 100 to find the 3D display.

A Bluetooth pairing process generally starts by a master device transmitting an inquiry message and a slave device scanning the inquiry message and responding to it. Since the slave device should search all channels through which the inquiry message is transmitted to scan a pairing target, it may consume much power and thus may need a sufficient power source. However, when the 3DG device 200 is used wirelessly, the 3DG device 200 may not have sufficient standby power. Also, the information processing ability of the 3DG device 200 may be markedly poor in comparison with that of the 3D display device 100 due to the performance limits of a CPU, a register, etc. of the 3DG device 200. These performance limits may result in increase in total pairing time.

Accordingly, in the present disclosure, the display device 100 serves as a slave and the 3DG device 200 serves as a master, so that the above problem can be solved. That is, the 3DG device 200 transmits the inquiry message to the 3D display device 100 first, and the 3D display device 100 scans the inquiry message through frequency hopping. The 3D display device 100 generally has constant power and thus does not cause the problem of the standby power limit, and also, has a high data processing speed and thus can scan swiftly.

At operation of transmitting the EIR packet (S920), the 3D display device 100 listens to the inquiry message and transmits an extended inquiry response (EIR) packet including a path loss threshold value. This operation is performed in a frequency hopping method. The path loss threshold value refers to a loss rate of a signal and is a maximum path loss value that the 3D display device 100 allows for the 3DG device 200. According to an exemplary embodiment, the path loss threshold value may have a value of 60-100dB. As will be explained below, the 3DG device 200 calculates a path loss value and compares it with the transmitted path loss threshold value, and, when the calculated path loss value is less than the path loss threshold value, determines that the 3D display device 100 is in the proximity of the 3DG device 200 and attempts at pairing.

At operation of receiving the association notification packet (S930), the 3D display device 100 receives the association notification packet requesting the association from the 3DG device 200 based on the path loss value. That is, when the 3DG device 200 calculates the path loss value and determines that the 3D display device 100 is in the proximity of the 3DG device 200, the 3DG device 200 transmits the association notification packet to the 3D display device 100. When the 3DG device 200 wants to find another 3D display device, the 3DG device 200 transmits an inquiry packet again (operation S910 resumes). The process of determining the proximity will be explained below with reference to FIG. 10.

At operation of transmitting the baseband acknowledgement (S940), the 3D display device 100 transmits the baseband ACK to the 3DG device 200 in response to the association notification packet.

Referring to FIG. 10, an association process according to another exemplary embodiment includes: receiving an inquiry message (S 1010), transmitting an EIR packet (S 1020), comparing a path loss value (S1030), receiving an association notification packet (S1040), and transmitting a baseband ACK (S1050). Operations S1010, S1020, S1040, and S1050 are the substantially same as operations S910, S920, S930, and S940 described above.

At operation of comparing the path loss value, when a path loss value is less than a path loss threshold value, the 3DG device 200 determines that the 3D display device 100 is in the proximity of the 3DG device 200. The path loss value is a value that is obtained by subtracting a received signal strength indicator (RSSI) value from a transmitting end power value (TX power value). The TX power value is a parameter defined in the BT core specification and is 1 byte long, and may have a value ranging from -127 to 127 dBm. That is, the path loss value is a difference between a power value when the 3D display device 100 transmits the EIR packet and a signal strength value that is detected at a receiving end after signal loss occurs in the transmission process. The 3DG device 200 determines whether the 3D display device 100 and the 3DG device 200 could stably perform synchronization through Bluetooth pairing based on such a signal loss rate.

For example, the following situation may be assumed:

path loss threshold value: 60dB

First EIR

- TX Power Value=+4 dBm

- RSSI of EIR Packet=-60dBm

Since path loss=4(-60)=64dB exceeds the threshold value, the 3DG device 200 receives an EIR of another 3DD 100.

Second EIR

- TX Power Value=+15dBm

- RSSI of EIR packet=-40dBm

Since path loss=15(-40)=55 dB falls within the threshold value, the 3DG device 200 determines that the 3D display device 100 is in the proximity of the 3DG device 200 and performs pairing.

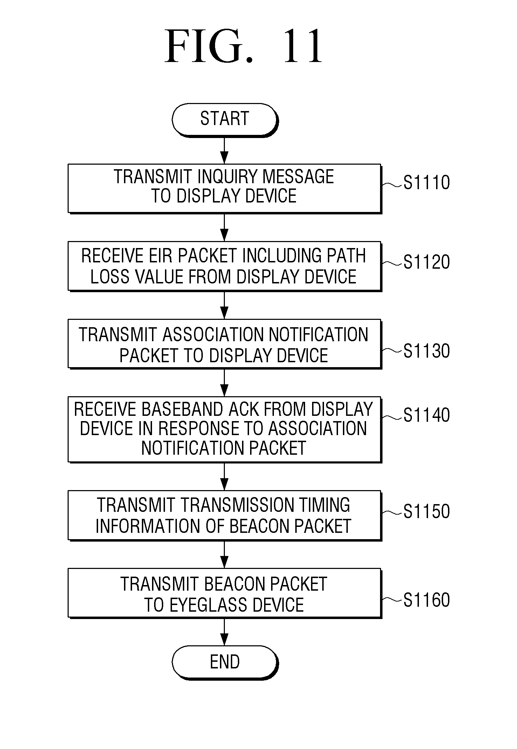

FIG. 11 is a flowchart illustrating a synchronization method of the eyeglass device, further including the association notification process illustrated in the sequence diagram of FIG. 8.

Referring to FIG. 11, the synchronization method of the eyeglass device includes: transmitting an inquiry message to the display device 100 (S1110), receiving an EIR packet including a path loss threshold value from the display device in response to the inquiry message (S1120), transmitting an association notification packet requesting the association with the display device 100 to the display device 100 according to a path loss value (S1130), receiving a baseband ACK from the display device 100 in response to the association notification packet (S1140), transmitting transmission timing information of a beacon packet (S1150), and transmitting the beacon packet to the eyeglass device 200 (S1160).

Since the exemplary embodiment of FIG. 11 is the substantially same as the exemplary embodiments of FIGS. 8 to 10, a redundant explanation is omitted.

As described above, when the Bluetooth 3DG device 200 wants to find the 3D display device 100 to associate with, the Bluetooth 3DG device 200 may perform the association process. The 3DG device 100 may support association with one target device at a time.

In the association process, the 3DG device 200 that attempts to find another 3D display nearby may be an inquiry device and may actively transmit the inquiry request. The 3D display device 100, which may be found, listens to such an inquiry request and may transmit the EIR. The 3DG device 200 should select the 3D display device 100 that has a minimum path loss defined in table 4. When the path loss is greater than the threshold value, the 3DG device 200 finds another 3D display. The 3D display device 100 cannot grasp how many 3DG devices 200 listen and does not store any information on the 3DG device 200. When other Bluetooth devices such as a keyboard and a headphone are associated with the 3D display device 100, a Bluetooth controller of the 3D display device 100 schedules their inputs for one of the 7 links of piconet.

Table 3 shows packets for the association process.

[Table 3]

| Packet | Packet Type | User Length (Bytes) | Direction | Packet Description | Parameters |
|---|---|---|---|---|---|
| Inquiry | ID | na | 3DG to 3D display | Standard BT inquiry sequence | |
| EIR (Extended Inquiry Response) | Per BT Spec. | 7 | 3D display to 3DG | Information on the 3D display that is included in the EIR packet and transmitted to the 3DG in response to the inquiry | Length-Manufacturer Specific, Manufacturer Specific, Fixed ID, Reserved, Flags, Path loss threshold |
| | | 3 | 3D Display to 3DG | EIR transmission power of the 3D display | Length-TX Power, TX Power Level, TX Power Value |
| Association Notification | DMI | 17 | 3DG to 3D display | Information regarding the 3DG related to the 3D display. It is generally used by the 3D display to provide user feedback. | 3DG BD Address, Device Type, Reserved 3DG Version No. Battery Type Remaining Battery Voltage Battery Charging Status Remaining Battery (ratio)Remaining Battery (time)Color ShiftReserved |
| Baseband ACK | NULL | na | 3D display to 3DG | RF Acknowledgement | |

**6.2.1.1. EIR Packet**

The EIR packet may be transmitted any time while a response to the inquiry is transmitted. This packet may be transmitted to the 3DG device 200 by a 3D display Bluetooth controller on the 3D display device 100. The EIR packet conforms to the Bluetooth standard rules, but has some execution fields specialized by a manufacturer. Such a finding process is the same as used in the Bluetooth core spec.

Table 4 shows parameters regarding the EIR packet specialized by the manufacturer and provided in the spec. The EIR packet includes manufacturer specific data and a TX power value from among basic EIR data. The TX power value is used to find the proximal 3D display device 100 as described above and this field may be located in the EIR packet. In future, a new EIR data structure may be added to a 'significant part' of the EIR defined in the Bluetooth core spec. by FHD3DI. In addition, any scheduled field may be disregarded by the 3DG device 200.

The tables and the description in the present specification are provided in the little endian format.

[Table 4]

| Parameter | | Parameter Description |
|---|---|---|
| Length-Manufacturer Specific | | This parameter is used to include a length value for EIR parsing. |
| Manufacture Specific | | This parameter may be used to parse the EIR message. A designated value '0xFF' may be set to include manufacturer information |
| Fixed ID | | This parameter may be filled by the 3D display. A value may be set as 0x000F meaning a 3D glasses profile suggested by BT-SIG. |
| Reserved | | This parameter may be set to 1 byte field 0. |
| Flags | Multicast capable | This parameter is used for the 3DG to confirm whether the response device (3D display) is capable of multicasting or not. When a value is set to 1, the 3D display is capable of multicasting. |
| | Reserved | This parameter is a reserved area and is not used. |
| | Sending Beacon | This parameter is managed by the Bluetooth controller. The DTV sets a bit according to whether the TV is in a 3D mode (set to 1), a 2D mode or other modes (set to 0). 1: The Bluetooth controller transmits the beacon. 0: The Bluetooth controller does not transmit the beacon. |
| | Reserved (Remote Paired) | This parameter is a bit that is not used by the 3DG. This parameter may be reserved in the FHD3DI specification to minimize confusion over an FHD3DI licensee. 1: paired with a remote controller. 0: not paired with a remote controller |
| | Showroom Mode | The DTV sets a bit according to whether the TV is in a showroom mode (set to 1) or a home mode (set to 0). 1: showroom mode enable, 0: showroom mode disable |
| | Reserved (Remote Pairable Mode) | This parameter is a bit that is not used by the 3DG. This parameter may be defined as being reserved in the FHD3DI specification to minimize confusion over the FHD3DI licensee. 1: remote pairable mode, 0: not remote pairable mode. |
| | Reserved | This parameter is a reserved area and is not used. |
| | Test Mode For Bluetooth Qualification | This parameter is used in a test mode enabled in the 3DG. A value is set to 0 in a normal mode. When connected 3DG want to enter the test mode, the value is set to 1 (for example, |
| | Body Test | use in a factory) |
| Path loss threshold (dB) | | When the 3DG determine whether the 3DG are located within a distance requested by the 3D display, this value is used. This value means maximum allowable path attenuation from the Bluetooth controller of the 3D display to the 3DG. When an attenuation value is greater than this value, the 3DG is notified that the 3D display is far and another 3D display should be found. Path loss=TX power value-EIR_RSSI |
| Length-TX Power | | This parameter is used to include a length value for parsing EIR. |
| TX Power Level | | This parameter is used to parse the EIR message. A designated value 0x0A may be set to instruct a TX power level field. |
| TX Power Value (dBm) | | When the 3DG determine whether the 3DG are located within a distance requested by the 3D display, this value is used. This value may set output power of the Bluetooth controller of the 3D display when responding to the inquiry. |

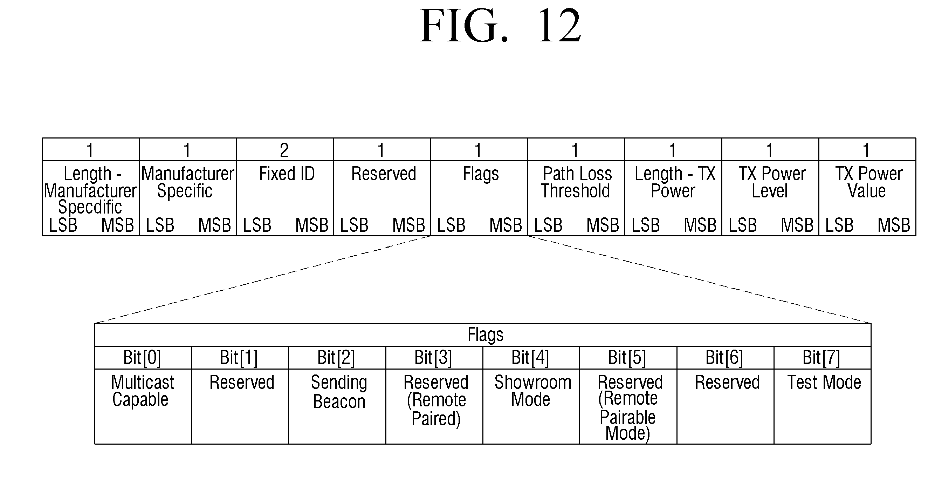

FIG. 12 is a view illustrating an air format of an EIR payload.

Table 5 shows EIR payload parameters.

[Table 5]

| Name | Length (Bytes) | Type | Unit | Value | Detailed Description |
|---|---|---|---|---|---|
| Length-Manufacturer Specific | 1 | u_int8 | - | 6 | Manufacturer's own section length |
| Manufacturer Specific | 1 | u_nit8 | - | 0xFF | EIR data type: Manufacturer's own data |
| Fixed ID | 2 | u_nit16 | - | 0x000F | |
| Reserved | 1 | u_nit8 | - | 0 | Reserved area, This may be set to 0. |
| Flags | 1 | - | - | | See table 6, Parameters in the flags field |
| Path loss threshold | 1 | | dB | | A value normally ranges from 60 to 100dB. |
| Length-TX Power | 1 | u_nit8 | - | 2 | Length of TX power section |
| TX-power Level | 1 | u_nit8 | - | 0x0A | EIR data type: TX Power Level |
| TX Power Value | 1 | u_nit8 | dBm | | The default TX power of the Bluetooth controller normally ranges from 0 to 10dBm. |

Table 6 shows parameters of the Flags field.
The 3D display may set a bit to provide information on a state of the 3D display device 100.

[Table 6]

| Name | Location | Value | Detailed Description |
|---|---|---|---|
| Multicast capable | Bit[0] | 1 | This value is always 1. 1: The 3D display is capable of multicasting, 0: The 3D display is incapable of multicasting. |
| Reserved | Bit[1] | 0 | Reserved |
| Sending beacon | Bit[2] | - | This parameter is managed by the Bluetooth controller. 1: The Bluetooth controller transmits the beacon, 0: The Bluetooth controller does not transmit the beacon. |
| Reserved (Remote Paired) | Bit[3] | - | 1: remote paired, 0: not remote paired |
| Showroom Mode | Bit[4] | - | 1: Showroom mode enable, 0: showroom mode disable |
| Reserved (Remote Pairable Mode) | Bit[5] | - | 1: remote pairable mode, 0: not remote pairable mode |
| Reserved | Bit[6] | - | Reserved area, but not available. |
| Test Mode for Bluetooth Qualification Body Test | Bit[7] | - | 1: test mode, 0: normal mode |

### 6.2.1.2. Association Notification Packet

When the 3DG device 200 wants to find a relevant 3D display device 100, the Bluetooth controller of the 3D display device 100 may listen to the association notification existing in a frame right after transmitting the EIR packet. The 3DG device 200 may transmit such a notification when it decides to associate with the 3D display device 100. The present specification uses a DMI packet to transmit the association notification. The Bluetooth controller of the 3D display device 100 informs every Bluetooth protocol of this message. When the 3DG device 200 does not receive the baseband ACK, the 3DG device 200 repeats the inquiry and repeats the association notification process many times. Even if the 3DG device 200 fails to transmit the association notification, the 3DG device 200 may be regarded as being associated with the 3D display device 100. The baseband ACK is a null packet that has an ARQN bit set for the ACK in response to the association notification packet.

Table 7 shows parameters of the association notification payload.

This packet includes an address and a device type of the Bluetooth device (BD) of the 3DG device 200.

When the parameter of the association notification packet, '3DG Version No.', is 0([0000]), the following parameters may be disregarded:

Battery Type

Voltage of Remaining Battery

Battery Charging Status

Remaining Battery (Ratio)

Remaining Battery (Time)

Color Shift

[Table 7]

| Parameter | Parameter Description |
|---|---|
| 3DG BD Address | This parameter sets an address of the Bluetooth device of the associated 3DG. The 3D display uses this information to identify the 3DG associated therewith. |
| Device Type | This parameter is used to determine what type of device is associated with the 3D display. A current value is set to 0 and indicates only the 3DG. |
| Reserved | 1 byte field is set to 0. |
| 3DG Version No. | This parameter is used to specify a version of the 3DG conforming to the specification. |
| Battery Type | This parameter is used to identify a battery type. |
| Remaining Battery Voltage | This parameter is used to notify a remaining voltage of the battery. |
| Battery Charging Status | This parameter is used to notify a change status of the battery. |
| Remaining Battery (ratio) | This parameter is used to notify a ratio of a remaining battery to full charge of the battery. |
| Remaining Battery (time) | This parameter is used to notify a remaining battery with time. |
| Color Shift | This parameter is used to compensate for color shift by a shutter. |
| Reserved | This parameter is a 4-byte field and is reserved for future use. |

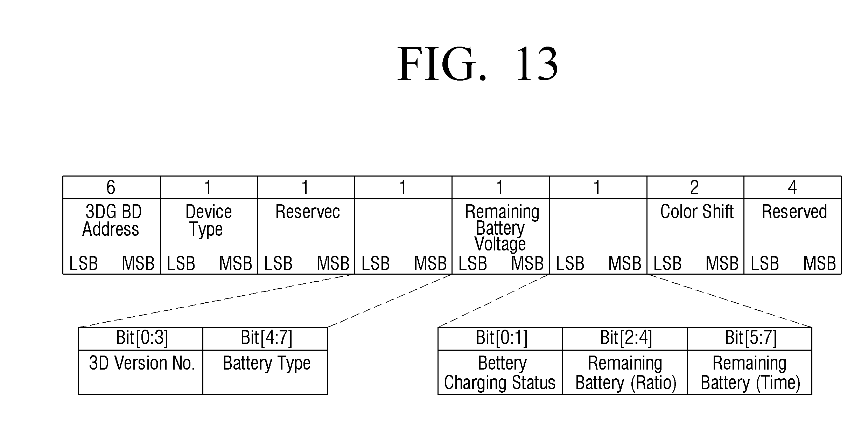

FIG. 13 is a view illustrating an air format of the association notification payload.

Table 8 shows parameters of the association notification payload.

[Table 8]

| Name | Length (bytes) | Type | Unit | Detailed Description |
|---|---|---|---|---|
| 3DG BD Address | 6 | multiplebytes | - | BD Address of 3DG |
| Device Type | 1 | u_nit8 | - | 0: 3DG 1-255: Reserved |
| Reserved | 1 | u_nit8 | - | Set to 0, Reserved for future use. |
| 3DG Version No. | Bit[3:0] | - | - | 0x01 for Ver.1.0 |

(continued)

| Name | Length (bytes) | Type | Unit | Detailed Description |
|------|------|------|------|------|
| Battery Type | Bit[7:4] | - | - | Set as default in the factory, see table 9 for details. |
| Remaining Battery Voltage (Vrem) | 1 | u_nit8 | - | 25*Vrem[mV](for Vrem=0 to 254) In the case of 3V, Vrem=120(decimal=0x78). No info(for Vrem=255) |
| Battery Charging Status | Bit[1:0] | - | - | See table 10 for details |
| Remaining Battery (ratio) | Bit[4:2] | - | - | See table 11 for details |
| Remaining Battery (time) | Bit[7:5] | - | - | See table 12 for details |
| Color Shift | 2 | u_nit16 | - | Sett table 8 for details |
| Reserved | 4 | u_nit8 | - | Set to 0, reserved for future use. |

Battery Type Field Data Format

Battery type field data may be formatted as in the following table.

[Table 9]

| Bit[4] | Description | Bit[5] | Bit[6] | Bit[7] | Description |
|------|------|------|------|------|------|
| 0 | Primary Cell | 0 | 0 | 0 | Unknown |
| | | 0 | 0 | 1 | Lithium |
| | | 0 | 1 | 0 | Alkaline, Zinc-carbon |
| | | 0 | 1 | 1 | PrimaryCell, Others |
| | | Others | | | Reserved |
| 1 | Secondary Cell (rechargeable) | 0 | 0 | 0 | Lithium-ion 1 [Normal] |
| | | 0 | 0 | 1 | Lithium-ion 2 [Reserved] |
| | | 0 | 1 | 0 | Lithium-ion 3 [LiFePO4) |
| | | 0 | 1 | 1 | Lithium-ion 4 [Reserved) |
| | | 1 | 0 | 0 | Ni MH [Nickel Metal Hydride) |
| | | 1 | 0 | 1 | Other Lithium |
| | | 1 | 1 | 0 | Others |
| | | 1 | 1 | 1 | Unknown |

When the battery type is not known, bit [7:4] may be set to 0 or all may be set to 1.
Table 10 shows a battery charging status.

[Table 10]

| Bit[0] | Bit[1] | Description |
|------|------|------|
| 0 | 0 | Not in charging status |
| 0 | 1 | In charging status |
| 1 | 0 | Reserved |
| 1 | 1 | No info |

Table 11 shows a remaining battery (ratio).

[Table 11]

| Bit[2] | Bit[3] | Bit[4] | Description |
|--------|--------|--------|-------------|
| 0 | 0 | 0 | Almost 0% |
| 0 | 0 | 1 | 25% remaining |
| 0 | 1 | 0 | 50% remaining |
| 1 | 0 | 0 | 75% remaining |
| 0 | 1 | 1 | Full charged |
| 1 | 1 | 1 | No info |
| Others | | | Reserved |

Table 12 shows a remaining battery (time).

[Table 12]

| Bit[5] | Bit[6] | Bit[7] | Description |
|--------|--------|--------|-------------|
| 0 | 0 | 0 | Remain under 2 hours |
| 0 | 0 | 1 | Remain under 5 hours |
| 0 | 1 | 0 | Remain under 10 hours |
| 0 | 1 | 1 | Remain more than 10 hours |
| 1 | 1 | 1 | No info |
| Others | | | Reserved |

Color Shift Field Data Format

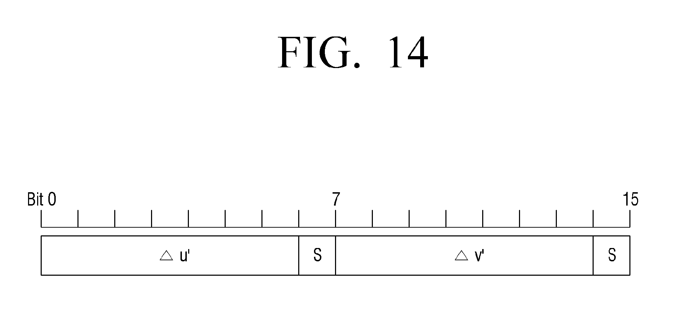

FIG. 14 is a view illustrating a color shift field format.

When color shift data of the 3DG 200 is available, this field is used to notify the 3D display device 100. The 3D display device 100 may match with the 3DG device 200 by adjusting colorimetry. The color shift field data may be formatted as follows.

A field S represents display of $\Delta u'$ and $\Delta v'$. If $\Delta u'$ or $\Delta v'$ is a minus value, the field S is set to 1. If not, the field S is set to 0. If a value of the color shift is 0, Bit[7:0]=0x80 and Bit[15:8]=0x80 are transmitted. When there is no information on the color shift, Bit[7:0]=0x00 and Bit[15:8]=0x00 are transmitted. The field of $\Delta u'$ and $\Delta v'$ indicates a distance from a white light source at u'-v' coordinates. A value representing method is 1/1000. For example, 0x96 is - 0.022 and 0x16 is +0.022. Details will be provided in section 7.8 of this specification.

### 6.2.1.3. Class of Device

Two classes of device (CoD) from the 3D display device 100, 0x00043C and 0x08043C, may be used.

### 6.2.1.4. Effects

As described above, the 3DG 200 can perform Bluetooth pairing without consuming power.

Also, the interface of the eyeglass device to select a pairing target may cause the manufacturing cost to rise. Also, since the target to be connected with the eyeglass device is a display device located nearby, the configuration to select the display device through the interface is unnecessary and rather may delay the pairing time.

However, the 3DG device 200 of the present disclosure does not have a separate interface to select the 3D display device 100. Instead, the 3DG device 200 performs pairing unconditionally when loss of the signal of the 3D display device 100 is less than a predetermined value (path loss threshold value). Accordingly, since the 3DG device 200 does not try to connect with a device that does not approach unnecessarily, the pairing time can be reduced. In addition, since the 3DG 200 does not try to perform Bluetooth pairing with a device other than the 3D display device 100, the pairing time can be remarkably saved.

### 6.2.2. Synchronization Establishment

Hereinafter, a method for the 3DG device 200 to obtain initial synchronization on a 3D beacon from the 3D display device 100 will be explained.

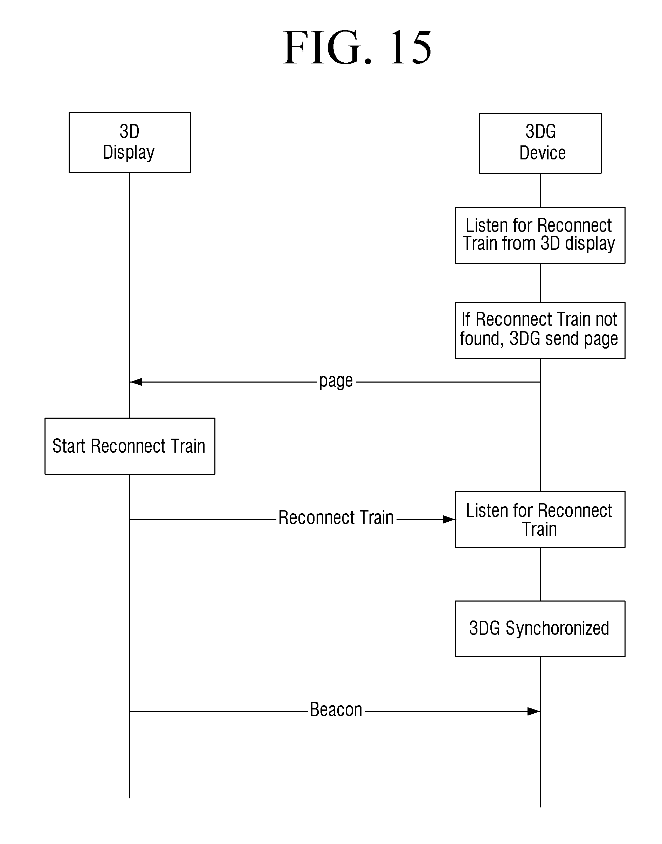

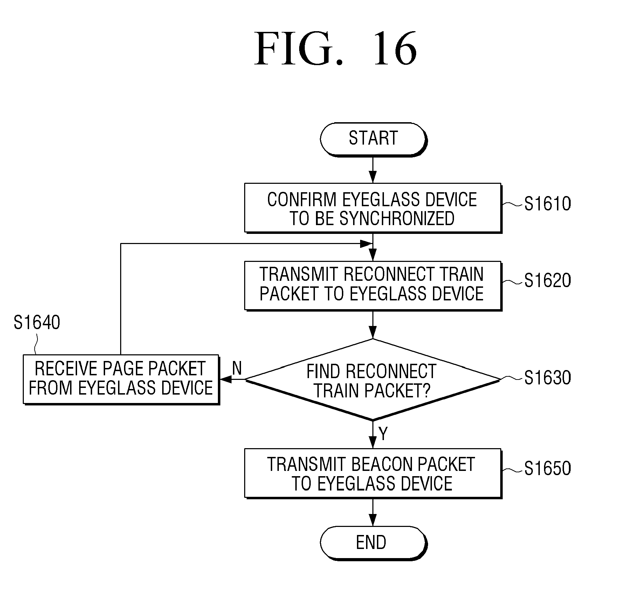

FIG. 15 is a sequence diagram showing a sequence of operations used by the 3DG device 200 to perform synchronization on the 3D display device 100 using a beacon, and FIG. 16 is a flowchart illustrating a synchronization method of the display device 100 including a synchronization establishment process of FIG. 15.

Referring to FIGS. 15 and 16, the synchronization establishment process includes transmitting a reconnect train packet (S 1620) and receiving a page packet (S 1640).

At operation of transmitting the reconnect train packet (S1620), the reconnect train packet including transmission timing information of a beacon packet is transmitted to the eyeglass device 200.

Table 13 describes packets for connection establishment.

[Table 13]

| Packet | Packet Type | User Payload (bytes) | Direction | Packet Description | Parameter |
|---|---|---|---|---|---|
| Page | ID | Na | 3DG to 3D display | Standard BT Page Sequence | |
| Reconnect Train | DM3 | 28 | 3D Display to 3DG | This packet is a sequence of periodic packets, and provides all the information for the 3DG to find a location of the 3D beacon. | Current BT Clock, Next Beacon Clock, AFH Channel Map, 3D display s BD Address, Beacon Interval, Version No., Display ID |

### 6.2.2.1. Reconnect Train Packet

The reconnect train packet is a sequence of periodic packets that are transmitted by the 3D display device 100 when the 3D display device 100 expects the 3DG 200 to consider synchronization. When the 3D display device 100 transmits the reconnect train packet, the 3DG device 200 is synchronized with the reconnect train packet.

The reconnect train packet includes all of the information for the 3DG device 200 to perform synchronization on the beacon which is transmitted from the 3D display device. Also, the reconnect train packet is transmitted at a predetermined frequency and at predetermined time intervals without frequency hopping. Specifically, a plurality of eyeglass devices 200 receive the broadcasting reconnect train packet through the same hopping map.

DM3 of the standard Bluetooth packet may be used to transmit the reconnect train as a non-standard method. The DM3 is so small as to match with a size smaller than a single frame. Each field of the reconnect train is included in a single frame and transmitted at a specific frequency. This packet is not used for another use due to a problem of compatibility.

Table 14 provides parameters of the reconnect train and their characteristics.

The 3DG device 200 can easily find the reconnect train. This is because the 3D display device 100 uses three continuous frequencies. The reconnect train starts with a page and is transmitted every 80ms for 120sec.

When the 3DG device 200 performs synchronization on the 3D beacon, the 3DG device 200 disregards the reconnect train. However, the reconnect train may continuously be **triggered** for a short while. Therefore, when there is a 3DG device that wants reconnect, the 3DG device may listen to the reconnect train and may be reconnected with the 3D display without requesting a page.

[Table 14]

| Parameter | Value | Description |
|---|---|---|
| Frequencies | 2402,2426,2480 | A single DM3 packet per frequency may be transmitted to a master slot in sequence. There is no frequency hopping regarding the reconnect train. The packet is always transmitted at these three frequencies. |

(continued)

| Parameter | Value | Description |
|---|---|---|
| Period | 80ms | The reconnect train is triggered at intervals of 80ms. |
| Duration | 120 seconds | When the 3D display receives a page from the 3DG device, the 3D display starts transmitting the reconnect train during a specific time. The reconnect train is generally transmitted for a short time period during which the 3DG can be synchronized. This minimizes RF signal interference by other devices. |
| Timeout | 311.25ms | The 3DG device may delay listening to the reconnect train. When the 3DG device does not find the reconnect train during the timeout, the 3DG device transmits a page. |

Table 15 explains parameters of the reconnect train payload.

[Table 15]

| Parameter | Parameter Description |
|---|---|
| Current BT Clock | The 3DG may use this parameter to obtain initial synchronization on the Bluetooth clock of the 3D display. A value is a current Bluetooth clock when the Bluetooth controller of the 3D display transmits this packet. |
| Next Beacon Clock | This parameter may be used by the 3DG to determine when the next beacon is triggered. A value is a Bluetooth clock when the Bluetooth controller of the 3D display transmits the next beacon. |
| AFH Channel Map | This parameter may be used by the 3DG to identify which RF channel is used by the 3D display. A value is a current AFH map set by the Bluetooth controller of the 3D display. The value is the same as the AFH channel map transmitted in a Bluetooth spec. AFH message. The AFH channel map may be used in transmitting the beacon. |
| 3D Display's BD Address | This parameter provides a full Bluetooth device address of the 3D display. A value is the Bluetooth controller's own BC address. |
| Beacon Interval | This parameter is used by the 3DG to identify an interval of the beacon. A value is a time interval of the beacon set by the Bluetooth controller of the 3D display device. |
| Version No. | This parameter is filled by the 3D display and may be set to a value of 1. |
| Display ID | This parameter is used to identify the display. When the 3DG are used in a cinema, all of the 3DG should turn off the LED to avoid disturbing users in a dark cinema environment. |

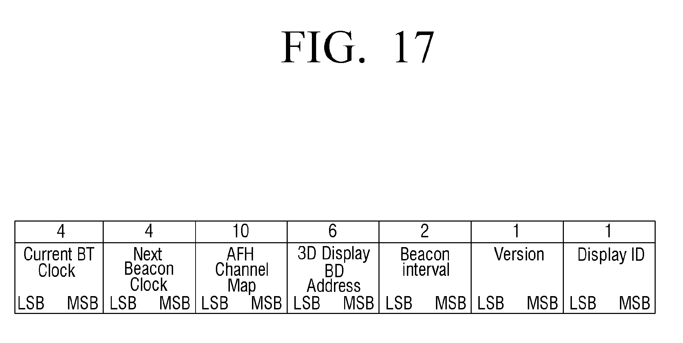

FIG. 17 is a view illustrating a format of the reconnect train payload.
Table 16 shows parameters of the reconnect train payload.

[Table 16]

| Name | Length(Bytes) | Type | Unit | Detailed Description |
|---|---|---|---|---|
| Current BT Clock | 4 | | | Snapshot of the current master Piconet clock (full 28 bit BT clock) |
| Next Beacon Clock | 4 | | | Transmission of the Bluetooth clock of the next beacon (full 28 bit BT clock) |
| AFH Channel Map | 10 | Multiplebytes | - | When a content is not reserved, 79 1-bit fields are included. The nth field includes a value on a channel n. Bit 79 |
| | | | | is reserved (set to 0 when being transmitted) and disregarded when being received). The 1-bit field may be interpreted as follows: 0: channel n is not used, 1: channel n is used |

(continued)

| Name | Length(Bytes) | Type | Unit | Detailed Description |
|---|---|---|---|---|
| 3D Display's BD Address | 6 | Multiplebytes | - | BD address of the 3D display |
| Beacon Interval | 2 | u_nit16 | slots | The beacon interval may be 128 slots (80ms). |
| Version No. | 1 | u_nit8 | - | set to 1, not a compatibility issue. |
| Display ID | 1 | u_nit8 | - | set to 0: for family use, 1-31: for cinema use, 32-255: reserved for future use |

As described above, the eyeglass device 200 just operates in synchronization with the display timing of the image frame of the display device 100 and is not required to transmit data to the display device 100. Accordingly, there is no need to generate a separate data link between the display device 100 and each eyeglass device 200 according to the Bluetooth communication standard. Instead, the eyeglass device 200 receives the reconnect train packet transmitted by the display device 100 using the same hopping map, as described above. Accordingly, the eyeglass device 200 can receive beacon timing information swiftly and exactly and can reduce the whole Bluetooth pairing time.

The 3DG 200 receives the beacon packet according to information included in the reconnect train packet after receiving the reconnect train packet.

At operation of receiving the page packet (S1640), when the eyeglass device 200 does not find the reconnect train packet within a predetermined time, the display device 100 receives the page packet from the eyeglass device 200.

When the 3D display device 100 receives the page packet, the 3D display device 100 transmits the reconnect train packet to the eyeglass device 200 again. This is an indication that the 3D display device will trigger the reconnect train.

### 6.2.3. 3D Synchronized Operation

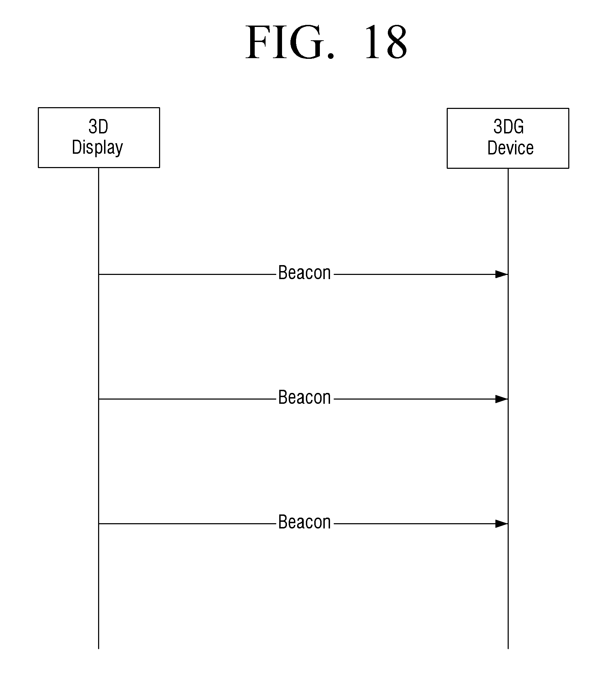

FIG. 18 is a view illustrating a timing sequence of a 3D synchronization operation.

The 3DG device 200 establishes synchronization with the Bluetooth controller 3D beacon, listens to the beacon periodically, and maintains the synchronization by adjusting a 3D shutter timing based on a content of the information included in the beacon.

Table 17 describes parameters for the 3D synchronization operation.

[Table 17]

| Packet | Packet Type | User Payload (bytes) | Direction | Packet Description | Parameter |
|---|---|---|---|---|---|
| Beacon | DMI | 17 | 3D Display to 3DG | The beacon is a sequence of periodic packets for providing L/R shutter control information on the 3DG. The 3DG uses this packet to synchronize with the Bluetooth clock of the display. | BT clock at rising edge of Frame Sync, Reserved, Dual-View Mode, Reserved, BT clock phase at rising edge of Frame Sync, Left shutter open offset, Left shutter close offset, Right shutter open offset, Right shutter close offset, Frame Sync Period (Integer), Frame Sync Period (Fraction) |

### 6.2.3.1. Beacon Packet

The beacon provides 3D timing information to the 3DG device 200 which listens to it. The beacon may be a periodic sequence of DM1 packets for providing L/R shutter control information to the 3DG device. The beacon provides a frame sync rising edge regarding the Bluetooth clock of the Bluetooth controller, and provides a shutter control timing related to the frame sync. The 3DG device 200 may minutely control the shutter control timing as it uses a value of the Bluetooth clock in the frame sync field. Also, the 3D display device 100 defines a duty cycle consisting of shutter on/close periods in the 3D beacon. The 3D beacon packet may be transmitted every 80ms. The 3DG device 200 may provide a dual-view mode.

Table 18 describes parameters of the beacon payload.

[Table 18]

| Parameter | Parameter Description |
|---|---|
| BT clock at rising edge of frame sync | The 3DG may use this parameter to determine a single frame sync rising edge time in the Bluetooth clock. When a rising edge of a last frame sync is detected, the Bluetooth clock is set by the Bluetooth controller of the 3D display. |
| Reserved | A field of 2 bit may be set to 0. |
| Dual-View Mode | When the 3D display provides a dual-view mode, the dual view mode may be set. In the dual-view mode, the next shutter offset field is used for another use. |
| Reserved | A1-bit field is set to 0. |
| BT clock phase at rising | The 3DG uses this parameter as a fractional BT clock value to get 1 us accuracy on the frame sync as measured by the Bluetooth |
| edge of frame sync | clock. This is set by the BT controller of the 3D display to provide BT clock timing for frame sync rising edge in units of lus. |
| Left shutter open offset (or) video stream 1 in dual-view mode | The 3DG opens the left shutter at this offset from the frame sync. A micro second offset is set from the frame sync rising edge when the left shutter is opened. |
| Left shutter close offset (or) video stream 1 in dual-view mode | The 3DG closes the left shutter at this offset of the frame sync. A micro second offset is set from the frame sync rising edge when the left shutter is closed. |
| Right shutter open offset (or) video stream 2 in dual-view mode | The 3DG opens the right shutter at this offset from the frame sync. A micro second offset is set from the frame sync rising edge when the right shutter is opened. |
| Right shutter close offset (or) video stream 2 in dual-view mode | The 3DG closes the right shutter at this offset of the frame sync. A micro second offset is set from the frame sync rising edge when the right shutter is closed. |
| Frame sync period (integer)/frame sync period (fraction) | The 3DG controls the left and right shutters while listening to the beacon using the frame sync period. A value is set by the BT controller of the 3D display and a frame sync period measured in the unit of micro second and 1/256 micro second is set. |

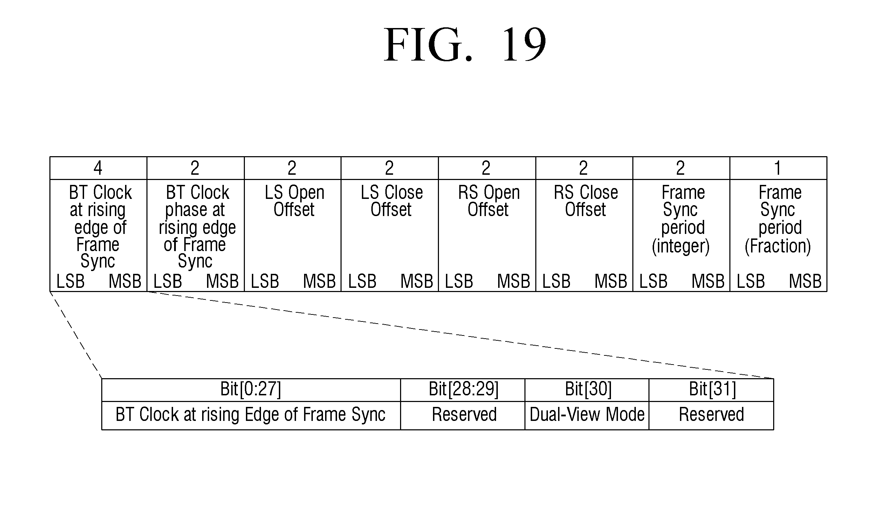

FIG. 19 is a view illustrating an air format of the beacon payload.

Table 19 shows parameters of the beacon payload.

[Table 19]

| Name | Length (Bytes) | Unit | Type | Detailed Description |
|---|---|---|---|---|
| BT clock at rising edge of frame sync | Bit[27:0] | | | BT clock (full 28 bits) |
| Reserved | Bit[29:28] | - | | set to 0, reserved for future use |
| Dual-view mode | Bit[30] | - | | 0: 3D mode, 1: dual-view mode |
| Reserved | Bit[31] | - | | set to 0, but is not available |
| BT clock phase at rising edge of frame sync | 2 | us | u_int16 | a Bluetooth clock period value in the unit of micro second, This is associated with a Bluetooth clock arriving at exact micro second timing on the frame sync rising edge. An effective range is 0-624 us. |

(continued)

| Name | Length (Bytes) | Unit | Type | Detailed Description |
|---|---|---|---|---|
| Left shutter open offset (or) video | 2 | us | u_int16 | Left shutter open offset (delay) from the frame sync rising edge, An effective range is 0-65535 us. A specific value 0xFFFF means |
| stream 1 in dual-view mode | | | | that the 3DG device is in a 2D mode. |
| Left shutter close offset (or) video stream 1 in dual-view mode | 2 | us | u_int16 | Left shutter close offset (delay) from the frame sync rising edge, An effective range is 0-65535 us. A specific value 0xFFFF means that the 3DG device is in a 2D mode. |
| Right shutter open offset (or) video stream 2 in dual-view mode | 2 | us | u_int16 | Right shutter open offset (delay) from the frame sync rising edge, An effective range is 0-65535 us. A specific value 0xFFFF means that the 3DG device is in a 2D mode. |
| Right shutter close offset (or) video stream 2 in dual-view mode | 2 | us | u_int16 | Right shutter close offset (delay) from the frame sync rising edge, An effective range is 0-65535 us. A specific value 0xFFFF means that the 3DG device is in a 2D mode. |
| Frame sync period (integer) | 2 | us | u_int16 | Frame Sync period integer portion in microseconds, e.g. 16666<br>Valid range is 0 - 65535 us |
| Frame sync period (fraction) | 1 | 1/256us | u_int8 | Valid range is 0 - 255<br>Frame Sync period fractional portion in 1/256 us.<br>This shall be added to the integer portion to arrive at the complete Frame Sync period. For example:<br>- Frame Sync Period Integer: 16666 us<br>- Frame Sync Period Fraction: 170 (0.6640625 us)<br>- Total Frame Sync Period: 16666.6640625 us |

### 6.2.3.2. Power Saving Operation

The 3DG device 200 provides a power saving mode. This is because information in the 3D beacon packet is not frequently changed. After establishing the synchronization, the 3DG device 200 is woken up during a plurality of beacon periods and listens to the beacon for updating to adjust the shutter timing. When the beacon contains new timing information, the 3DG device copies the new timing information into a register and drives the shutters of the lenses. Since the beacon may not change a certain value, the 3DG device 200 may continuously use the timing parameters already stored in the register. However, when the 3DG device 200 fails to obtain the beacon, the 3DG device 200 may slightly enlarge a reception window to obtain the beacon next time.

### Section 3. Shutter Device Specifications

### 7. Specifications for LC Shutter Devices

### 7.1. Summary of LC Shutter Devices Specifications

Table 20 summarizes the specifications for the LC shutter devices.
The following sub-classes are mentioned for details of the parameters.

[Table 20]

| Parameter | | Requirements | Unit | Remarks |
|---|---|---|---|---|
| Operational Frequency | | 48,50,60,72 | Hz | |
| Response Time | Rise Time | 2.0 Max | ms | 10-90% |
| | Rise Time (Recommended) | 1.1 Max | ms | 5-60% |
| | Fall time | 0.5 Max | ms | |
| Contrast ratio | | 300:1 Min 500:1 (Recommended) | | |
| Average Transmittance | | 30 Min | % | |
| Maximum Viewing Angle (Recommendation) | | 20 Min | deg | Angle maintaining contrast ratio>100 |
| Color Shift (Recommendation) | | 0.02 Max | | for any direction of color shift in u, v |
| Incident Polarization axis transmitted in open state | | 90}15 | deg | Linear polarization 1 deg=axis that connects both eyes. |

**7.2. Shutter Operation Timing**

The shutter on/off timing is defined using "normalized transmittance" when the maxim transmittance of the LC shutter is defined as 100% and the minimum transmittance is defined as 0%. To achieve this, the shutter for each eye is opened or closed at 60Hz and a green LED emits light.

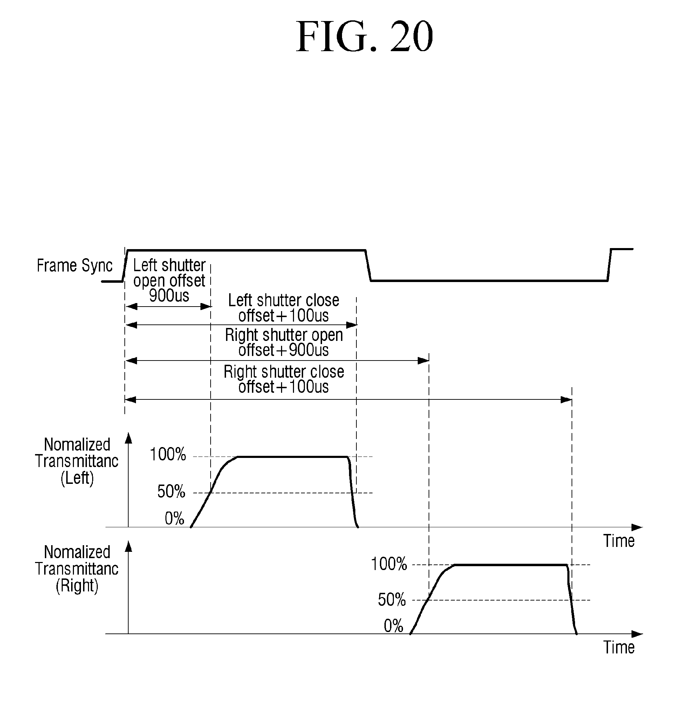

FIG. 20 is a view illustrating shutter on/close timing.

"Left shutter open offset+900 us" and "left shutter close offset+100 us" (the left shutter open offset and the left shutter close offset are defined in section 2) may be the same as a time reaching 50% of the normalized transmittance for the rising edge of the frame sync. In the same way, "right shutter open offset+900 us" and "right shutter close offset+100 us" (the right shutter open offset and the right shutter close offset are defined in section 2) may be the same as a time reaching 50% of the normalized transmittance for the rising edge of the frame sync. There may be a change of about +-200 us in each open/close offset.

The normalized transmittance (S) for certain shutter transmittance is defined by the following equation:

[Equation 1]

$$\text{Normalized Transmittance (S) } [\%] = \frac{\text{Transmittance (S) - Transmittance (Min)}}{\text{Transmittance (Max) - Transmittance (Min)}} \times 100$$

A packet that is transmitted from a specific 3D display device to the RF transceiver of the 3DG needs to optimize the operation considering characteristics of the 3DG.

**7.3. Common Measurement Conditions for LC Shutter Specifications**

The measurement conditions for the LC shutter specifications are as follows unless otherwise stated.

**7.3.1. Light Source**

Using a green LED light source having dominant wavelength of 521 nm, a response time, a contrast ratio, and average transmittance at a maximum viewing angle are measured.

A white light source is used to measure a color shift and a polarization axis transmitted in an open state. The white light source is synchronized with red, green, and blue LEDs having dominant wavelengths of 635 nm, 521 nm, and 465 nm, respectively. A color temperature (Tc) of the white light source is 6500K.

### 7.3.2. Angle of Incident Light

Light for measuring is incident perpendicular to an LC shutter plane.

### 7.3.3. Operational Frequencies

The following four frequencies are used:

(1) 48 ±0.5 Hz
(2) 50 ±0.5 Hz
(3) 60 ±0.5 Hz
(4) 72 ±0.5 Hz

### 7.3.4. Luminance meter

What is measured by this item is achieved by the luminance meter having the following functions:

(1) Measurement capability equivalent to the CIE 1931 standard colorimetric observer transformed as specified in ISO 11664-1
(2) Measurement capability for the luminance having accuracy of 0.005 cd/m2
(3) Analogue voltage output for measuring a response time, observed by an oscilloscope

### 7.4. Response Time

A rise time of the LC shutter is defined by a transition time from a close state to an open state, and is specified in two ways:

Rise Time 1 ($T_r$): time from 10% to 90% may be shorter than 2.0 ms.

Rise Time 2 ($T_r$): time from 5% to 60% may be shorter than 1.1 ms.

A fall time of the LC shutter is defined by a transition time from the open state to the close state and is specified in two ways:

Fall time ($T_f$): time from 90% to 10% may be shorter than 0.5 ms.

This may be known by referring to A.1 of Annex 1.
Note: Longer Rise time/Fall time may cause decrease of brightness, poor gradation and increase of 3D crosstalk. Therefore, the response time should be short enough so that the Shutter can be in its Open state for a reasonable fraction of the period of an image on the 3D Display without leaking light from adjacent periods.

### 7.5. Contrast Ratio

The contrast ratio of the shutter is defined by a ratio of an intensity of light transmitted in the open state to an intensity of light transmitted in the close state, using incident light of a normal LC shutter plane.
The contrast ratio of 300:1 may be obtained. However, the contrast ratio of 500:1 is strongly recommended for optimized 3D image quality. See A.2 of Annex.

$$\text{Contrast Ratio} = L_a/L_b$$

($L_a$: Luminance of monochrome LED light passing through a diffuser plate and the LC shutter in the open state,

$L_b$: Luminance of monochrome LED light passing through the diffuser plate and the LC shutter in the close state)

Note: Since a low contrast ratio indicates a capability of the stutter of prohibiting undesired light emission during an adjacent period, it may cause 3D crosstalk. It is common that the contrast ratio should be higher than that in plural quantization steps usable in the image.

## 7.6. Average Transmittance

The average transmittance of the shutter is defined by a ratio of an intensity of light transmitted in the open state to an intensity of incident light, and is expressed by percentage.

The average transmittance of 30% or more may be obtained. See A.3 of Annex.

$$\text{(average transmittance in the forward direction)} = (2L_a/L_b) \times 100(\%)$$

($L_a$: Luminance of monochrome LED light passing through the diffuser plate and the LC shutter in the open state,

$L_b$: Luminance of monochrome LED light passing through the diffuser plate without the LC shutter)

Note: The average transmittance is the same as brightness of the 3D image viewed through the 3D glasses.

## 7.7. Maxim Viewing Angle (Recommendation)

The maximum viewing angle is defined by a maxim angle at which the contrast ratio falls to 100. The maxim viewing angle is measured by horizontally rotating the LC shutter on a main axis, which is on the shutter plane and is perpendicular to axes contacting both eyes.

The maximum viewing angle is ±degree or more. See A.4 of Annex A.

Note: When the 3D glasses are worn out, an angle at which light passes through the LC shutter depends on a normal direction of the user's face and the display's location. In general, the maximum performance of the LC shutter is achieved when normal light is incident on the LC shutter plane. Therefore, a partial viewing angle range is defined as a viewing angle when the contrast ratio is reduced lower than a normal minimum value.

## 7.8. Color Shift (Recommendation)

The color shift is defined as a difference in measurement values at u'-v' coordinates by the 3D glasses having white incident light. The color shift should be less than ±0.02 in any direction in the u'-v' space. This is transformation specified in ISO 11664-1 regarding the CIE 1931 standard colorimetric observer. See A.5 of Annex A.

$$\text{(color shift of front view)} = \sqrt{(u'_a - u'_b)^2 + (v'_a - v'_b)^2}$$

($U_a'$, $V_a'$: chromaticity coordinates of white LED light passing through a diffuser plate and the LC shutter in the open state, $U_b'$, $V_b'$: chromaticity coordinates of white LED light passing through the diffuser plate without the LC shutter)

Note: General transmittance of the LC shutter has wavelength dispersion. Therefore, the 3D glasses cause shift from original color of the 3D display device 100. Such shift cannot be avoided, but should be minimized as much as possible.

## 7.9. Polarization Axis of Light Transmitted by Shutters

The polarization axis of light transmitted when the shutter is in the open state may be 90±15 degrees. It can be known by referring to A.6 of Annex A.

**Section 4. Home Use Operations**

**8. LC Shutter Operations for Home Environment**

**8.1. Operation Mode**

**8.1.1 Normal (3D) Mode**

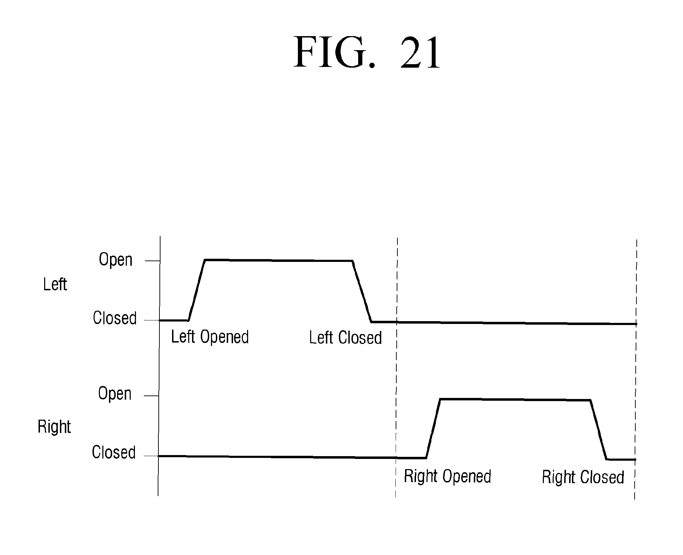

FIG. 21 is a view illustrating a normal 3D mode.

Referring to FIG. 21, when a viewer views a 3D program, the 3D glasses will operate in the normal (3D) mode. The value of the parameter of the beacon, "dual-view mode", is set to 0, and the glasses operate in four states like "left lens open", "left lens close", "right lens open", and "right lens close" as shown in FIG. 21.

**8.1.2. Dual-View Mode (Left/Right Mode)**

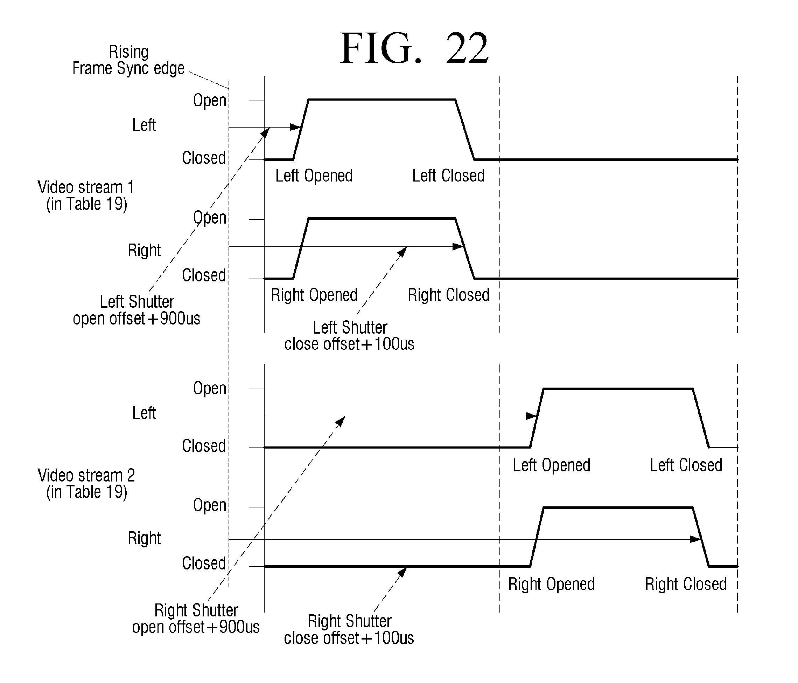

FIG. 22 is a view illustrating a dual-view mode.

Referring to FIG. 22, when the viewer views one of the two independent 2D programs, the 3D glasses operate in the dual-view mode. In this mode, the parameter of the beacon, "dual-view mode", is set to 1. Also, each eyeglass device may operate in two states like "both lenses open" and "both lenses close" as shown in FIG. 22.

**8.2. Association Operation**

**8.2.1. Association Cases**

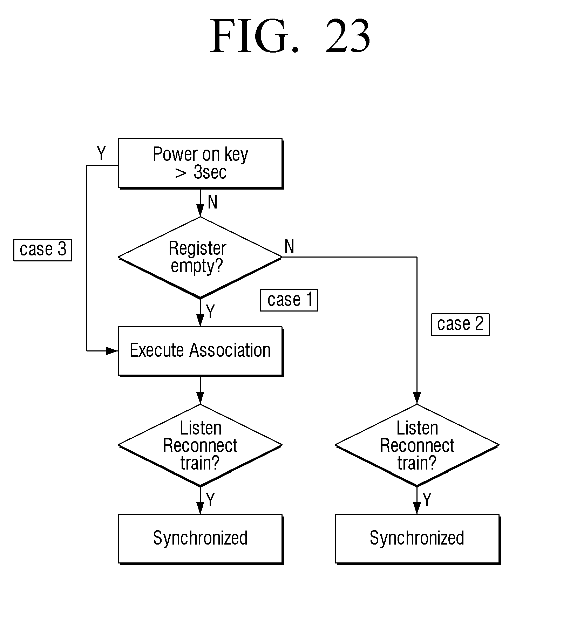

FIG. 23 is a flowchart illustrating association cases.

The glasses may have an association function and the following three cases may be supported. However, this should not considered as limiting.

Case 1 (first association): When the user performs association with newly purchased 3DG first, the 3DG do not have TV-BD address information at a register and the first association is performed as shown in FIG. 23.

Case 2 (Re-synchronization): When the user powers on the 3DG that have already registered at least one association information (that is, have TV BD address information at the register), re-synchronization may be performed as shown in FIG. 23.

Case 3 (Re-association): When the user performs association with the 3DG that have already registered at least one association information (that is, have the TV BD address information at the register), re-association may be performed as shown in FIG. 23.

**8.2.2. Association Requirements**

The glasses have a means for initializing association like a push button. The glasses have at least one register to memorize the last TV that has been associated. For home use, only one TV-BD address register is enough, but, for cinema use, one or more registers for cinema screens are convenient.

The 3DG are designed to associate with the closest TV that shows a minimum path loss threshold value, and is searched by the 3DG.

**9. State Transitions**

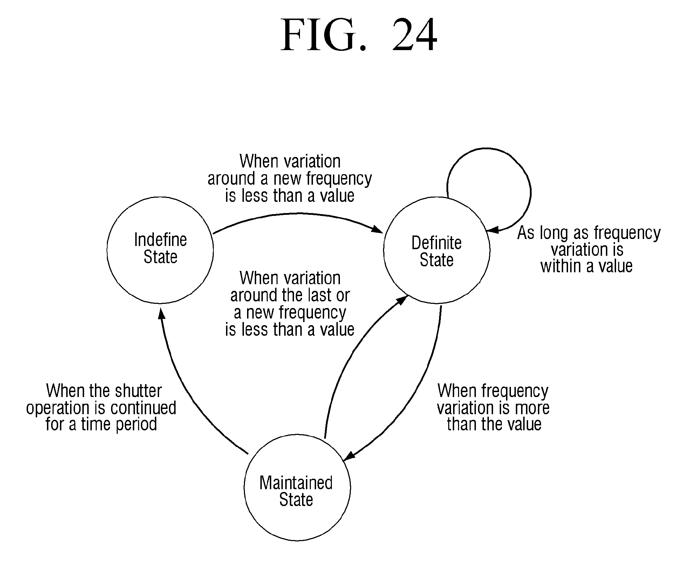

FIG. 24 is a view illustrating state transitions of the 3D glasses.

This section defines three states during the operation of the 3D glasses and a state transition condition of the three states. Each state is defined by an operational frequency searched by the 3D glasses and temporary variation of the operational frequency. To achieve stable and safe shutter operations, the three operation states may be prepared in the 3D glasses.

**9.1. Definite State**

The Definite State is the state where the operational frequency is definite and the shutter operation is performed on the basis of the decision data regarding the operational frequency successively determined. The decision data is generated and held when a predetermined condition is satisfied.

In this state, the operational frequency of the 3D glasses is fixed and the 3D glasses perform shutter open/close according to what is exactly determined by the frame frequency. The user may recognize a 3D image appropriately.

## 9.2. Maintained State

The maintained state refers to a state in which the operational frequency is maintained and the shutter operation continues based on the fixed determination data.

In this state, the 3D glasses maintain the previous operational frequency for a short while, so that the 3D glasses do not change the operation immediately when detecting incorrect information, and, when the 3D glasses incorrectly detect the operational frequency for some reasons such as a bit-error, interference, or jamming in the RF communication, the user is prevented from viewing an inappropriate image.

## 9.3. Indefinite State

The indefinite state refers to a state in which a field frequency is indefinite and the shutter operation is stopped. In this state, when the operational frequency is unstable and is not determined during a certain time, the left shutter and the right shutter of the 3D glasses may be opened from the perspective of a health issue.

## 9.4. Conditions of the State Transitions

Hereinafter, a transition condition of the three states, that is, the definite state, the maintained state, and the indefinite state will be explained (see FIG. 24).

### 9.4.1. In the definite state

The 3D glasses stay in the definite state as long as variation in the operational frequency falls within a predetermined value range. The transition to the maintained state is performed when the variation in the operational frequency is greater than or equal to the predetermined value.

### 9.4.2. In the maintained state

The transition to the definite state with the last determined operational frequency may be performed when variation from the last operational frequency to the operational frequency falls within a predetermined value range.

The transition to the definite state with a newly determined operational frequency may be performed when variation around the newly determined operational frequency is maintained within a predetermined value for a predetermined time. A maximum predetermined time interval may be 5 seconds.

The transition to the indefinite state may be performed when the shutter operation is continuously performed for a predetermined time without satisfying any one of the above-described two transition conditions. An example of the predetermined time is 5 seconds.

### 9.4.3. In the indefinite state

The transition to the definite state with the newly determined operational frequency may be performed when the newly determined operational frequency is maintained within a predetermined value during a predetermined time. A maxim predetermined time may be 5 seconds.

## Section 5. Cinema Specifications

## 10. Commercial Cinema Environment

The commercial cinema environment has its own problems in comparison with a home use DTV environment. There are many types of cinemas around the globe, such as a classical facility, a single auditorium theater, and a megaplex theater having many seats. Also, buildings include various features that may affect propagation of Bluetooth RF signals, such as an entrance, seats, a balcony, and building materials, etc. The Bluetooth 3DG technology is more likely to be used in a distance where thousands of 3DG are used simultaneously or a special event.

Accordingly, in the case of designing, implementing, and installing a Bluetooth controller system for cinema use, substantially different settings such as RF power, antenna pattern, and antenna installation location may be required.

Physical implementation may be different in each theater auditorium, but the cinema Bluetooth system may be exactly identical to DTV implementation regarding association and 3D synchronization. The Bluetooth controller for cinema use may receive 3D synchronization signals (that is, frame sync) from a cinema projector and may transmit beacon data to the 3DG in the cinema.

### 10.1. Cinema Bluetooth System

The cinema Bluetooth system may be associated with the 3DG as defined in the present specification.

In addition, the following is applicable to the cinema Bluetooth controller.

-   A plurality of cinema Bluetooth controllers may be used in the same auditorium to minimize RF output, maximize a range affected by signals in the cinema, and minimize intrusion of RF signals into a nearby cinema.

-   Class I Device

The cinema environment may be Class I Device.

-   Antenna

A direct antenna may be used to maximize a signal range in a single cinema and minimize RF interference to adjacent cinemas.

An amnidirectional antenna should be used only in a single audiotorium.

### 10.2. Cinema Bluetooth 3DG Association

In the cinema, the 3DG may be associated with a Bluetooth cinema emitter and may receive 3D synchronization information as defined in the 3DG user manual of the present specification.

### 10.3. Cinema Optical Requirements

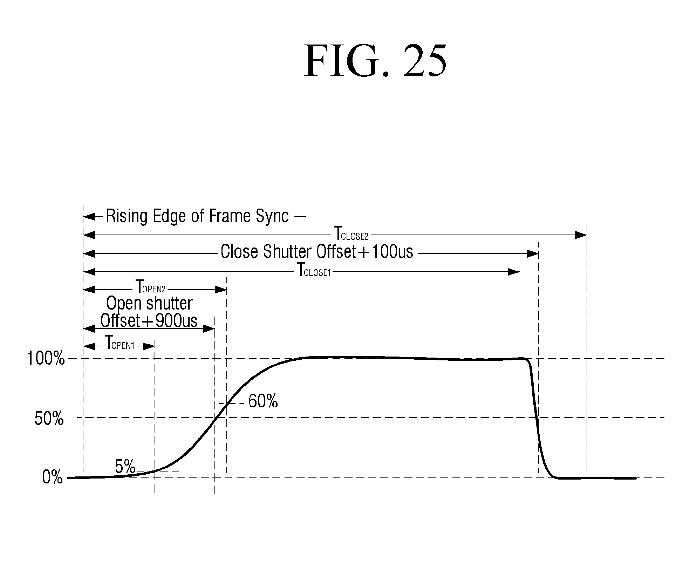

FIG. 25 is a view illustrating optical timing requirements of a cinema.

In addition to the optical requirements in the other portions of the present specification, the 3D glasses should satisfy the optical requirements described in the present specification (see table 21). When an open/close transmittance curve of the shutter does not satisfy minimum requirements, critical color distortion may occur in the cinema environment due to video clipping or crosstalk from the previous video frame.

[Table 21]

| Symbol | Characteristic | Min | Max | Units | Conditions |
|---|---|---|---|---|---|
| $T_{OPEN1}$ | Transmittance | | <5 | % | Shutter Open Offset |
| $T_{OPEN2}$ | Transmittance | >60 | | % | Shutter Open Offset+1100us |
| $T_{CLOSE1}$ | Transmittance | >98 | | % | Shutter Close Offset-200us |
| $T_{CLOSE2}$ | Transmittance | | <2 | % | Shutter Close Offset+900us |

### Section 6. Annexes

### Annex A Method of Measuring LC Shutter Device

### A.1 Response Time

### Measurement:

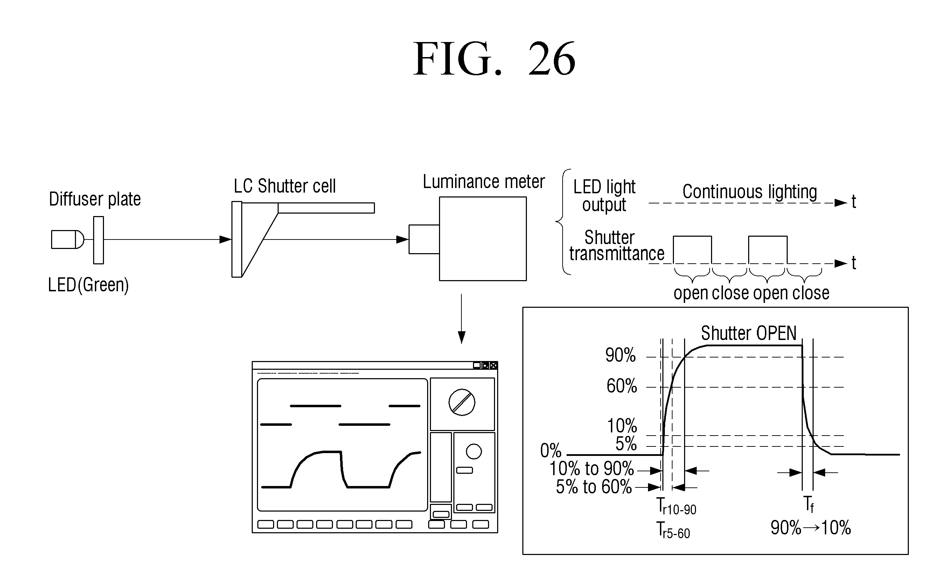

FIG. 26 is a diagram illustrating arrangements of equipments for measuring.

The response time may be measured using the following equipments and conditions:

Rise time ($T_{r10-90}$): time from 10% to 90% (ms)

Rise time ($T_{r5-60}$): time from 5% to 60% (ms)

Fall time ($T_f$): time from 90% to 10% (ms)

The luminance of monochrome LED may be measured in the forward direction after light passes through the diffuser plate and the LC shutter is switched. A signal of the luminance meter is observed by an oscilloscope.

**Measurement Arrangement and Equipments**

Measurement may be performed by the following equipments.

1. Luminance meter: BM-5AS (Topcon) or equivalent

2. Light Source: MSB-MX-25 (Dicon LED) or equivalent

3. Diffuser Plate: NT54-228 (Edmund Optics) or equivalent

4. IR Command emitter: (connect cable to light source to synchronize)

**Conditions:** Specific conditions are as follows:

1. Shutter: (Operational Frequency) = 60 (Hz)
50(%) duty cycle: The open state period is defined as a period in which the transmittance of the LC shutter is 50% or more, and the close state period is defined as a period in which the transmittance of the LC shutter is less than 50%.

2. LED: Continuous Lighting
color = Green (Main wavelength 521nm)

3. Working distance:

from Diffuser plate to LC shutter cell < 1 (m)

from LC shutter cell to Luminance meter < 1 (m)

4. Measurement angle of Luminance meter: 3 (deg)

5. Response Time setting of Luminance meter: FAST/Range 5(fastest) when using the BM-5AS

6. Dark room: < 1(1x)

**A.2 Contrast Ratio**

**Measurement:**

The contrast ratio may be measured using the following equipments and conditions.

$$(\text{Contrast ratio in the forward direction})= L_a/L_b$$

($L_a$: Luminance of monochrome LED light passing through the diffuser plate and the LC shutter in the open state, $L_b$: Luminance of monochrome LED light passing through the diffuser plate and the LC shutter in the close state)

The luminance is measured when the undular monochrome LED light passes through the diffuser plate and the switching LC shutter in the forward direction.

**Measurement Arrangement and Equipments:**

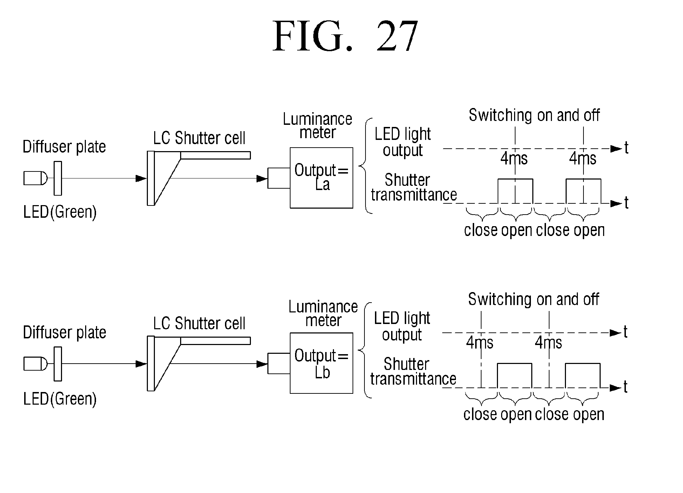

FIG. 27 is a view illustrating arrangements of equipments for measuring.
Measurements may be performed by the following equipments:

1. Luminance meter: CA-310 (Konica-Minolta) or equivalent
2. Light Source: MSB-MX-25 (Dicon LED) or equivalent
3. Diffuser Plate: NT54-228 (Edmund Optics) or equivalent
4. IR Command emitter: (connect cable to light source to synchronize)

**Conditions:**

Measuring conditions are as follows:

1. Shutter: (Operational Frequency) = 60 (Hz)
50 (%) duty cycle: The open state period is defined as a period in which the transmittance of the LC shutter is 50% or more, and the close state period is defined as a period in which the transmittance of the LC shutter is less than 50%.
2. LED: (Driving frequency) = 60 (Hz)
(pulse width) < 4ms
color = Green (Main wavelength 521nm)
3. Working distance:

from Diffuser plate to LC shutter cell < 1 (m)
from LC shutter cell to Luminance meter < 1 (m)

4. "Sync" setting of Luminance meter: UNIVERSAL when using the CA-310
5. Dark room: < 1(1x)

**A.3 Average Transmittance**

**Measurement:**

The average transmittance of the LC shutter may be measured using the following equipments and conditions.
Measured Items:

$$\text{(average transmittance in the forward direction)} = (2L_a/L_b) \times 100 (\%)$$

($L_a$: Average luminance of monochrome LED light passing through the diffuser plate and the LC shutter, $L_b$: Average luminance of monochrome LED light passing through only the diffuser plate)

The average luminance of the monochrome LED light is measured in the forward direction when the light passes through the diffuser plate with/without the switching LC shutter.

**Measurement Arrangement and Equipments:**

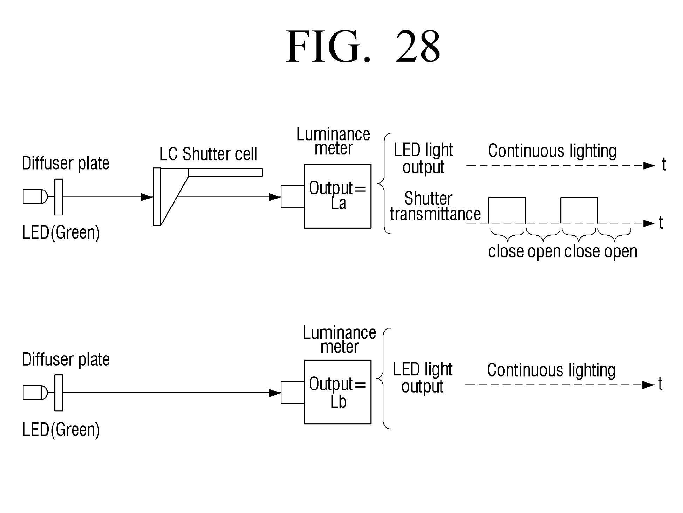

FIG. 28 is a view illustrating arrangements of equipments for measuring.
The following equipments may be used.

1. Luminance meter: CA-310 (Konica-Minolta) or equivalent
2. Light Source: MSB-MX-25 (Dicon LED) or equivalent
3. Diffuser Plate: NT54-228 (Edmund Optics) or equivalent
4. IR Command emitter:

**Conditions:**

Measuring conditions should be as follows:

1. Shutter: (Operational Frequency) = 60 (Hz)
2. 50(%) duty cycle: The open state period is defined as a period in which the transmittance of the LC shutter is 50% or more, and the close state period is defined as a period in which the transmittance of the LC shutter is less than 50%.

2. LED: Continuous Lighting
color = Green (Main wavelength 521nm)
3. Working distance
from Diffuser plate to LC shutter cell < 1 (m)
from LC shutter cell to Luminance Meter < 1 (m)
4. "Sync" setting of Luminance meter: UNIVERSAL when using the CA-310
5. Dark room: < 1(1x)

**A.4 Maximum Viewing Angle**

**Measurement:**

The maximum viewing angle of the LC shutter may be measured using the following equipments and conditions.

The maximum viewing angle is defined as a maximum angle ($\Phi$) at which the LC shutter is rotated around a vertical axis while a specific contrast ratio is maintained.

**Measurement Arrangement and Equipments**

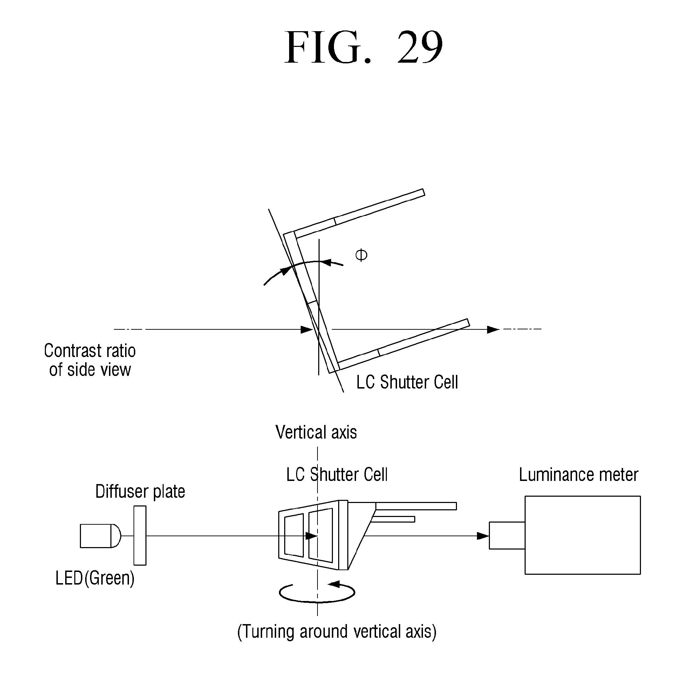

FIG. 29 is a view illustrating arrangements of equipments for measuring.

The following equipments may be used:

1. Luminance meter: CA-310 (Konica-Minolta) or equivalent

2. Light Source : MSB-MX-25 (Dicon LED) or equivalent

3. Diffuser Plate: NT54-228 (Edmund Optics) or equivalen

4. IR Command emitter: (connect cable to light source to synchronize)

**Conditions:**

Measuring conditions are as follows:

1. Shutter: (Operational Frequency) = 60 (Hz)
50(%) duty cycle: The open state period is defined as a period in which the transmittance of the LC shutter is 50% or more, and the close state period is defined as a period in which the transmittance of the LC shutter is less than 50%.

2. LED: (Driving frequency) = 60 (Hz)
pulse width < 4ms
color = Green (Main wavelength 521nm)

3. Working distance:

from Diffuser plate to LC shutter cell < 1 (m)

from LC shutter cell to Luminance Meter < 1 (m

4. "Sync" setting of Luminance meter): UNIVERSAL when using the CA-310

5. Darkroom: < 1(1x)

**A.5 Color Shift**

**Measurement:**

The color shift caused by the LC shutter may be measured using the following equipments and conditions.

$$(\text{Color shift in forward direction}) = \sqrt{(u_a' - u_b')^2 + (v_a' - v_b')^2}$$

($U_a'$, $V_a'$: chromaticity coordinates of white LED light passing through the diffuser plate and the switching LC shutter, $U_b'$, $V_b'$: chromaticity coordinates of white light passing through the diffuser plate without the LC shutter)

The chromaticity of the white LED light is measured in the forward direction when the light passes through the diffuser plate with/without the switching LC shutter.

**Measurement Arrangement and Equipment**

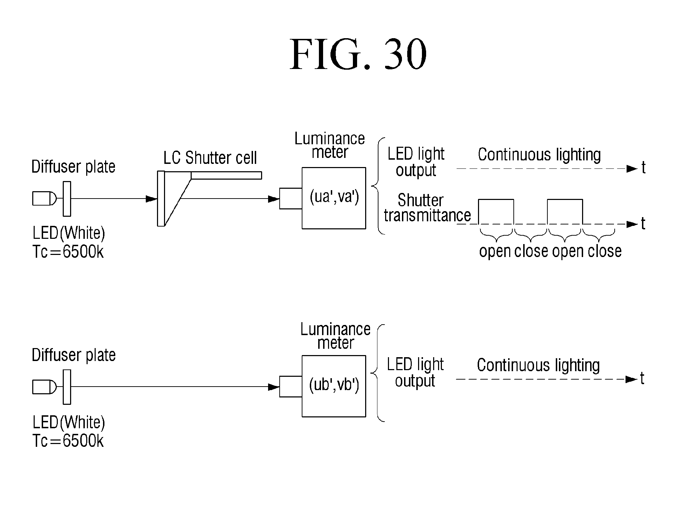

FIG. 30 is a view illustrating arrangements of equipments for measuring.
The following equipments may be used.

1. Luminance meter: CA-310 (Konica-Minolta) or equivalent
2. Light Source: MSB-MX-25 (Dicon LED) or equivalent
3. Diffuser Plate: NT54-228 (Edmund Optics) or equivalent
4. IR Command emitter: (connect cable to light source to synchronize)

**Conditions:**

1. Shutter: (Operational Frequency) = 60 (Hz)
50 (%) duty cycle: The open state period is defined as a period in which the transmittance of the LC shutter is 50% or more, and the close state period is defined as a period in which the transmittance of the LC shutter is less than 50%.
2. LED: Continuous Lighting
color white (Red, Green and Blue LEDs) color temp. = 6500 K
Red (Main wavelength 635nm)
Green (Main wavelength 521nm)
Blue (Main wavelength 465nm)
3. Working distance (from Diffuser plate to LC shutter cell) < 1 (m)
4. "Sync" setting of Luminance meter: UNIVERSAL when using the CA-310
5. Dark room: < 1(1x)

**A.6 Polarization Axis of Light Transmitted by Shutters**

**Measurement:**

The polarization axis of light transmitted by the LC shutter in the open state may be measured using the following equipments and conditions.

Measure Items

The transmitted polarization axis is defined as an angle ($\theta$) of a linear polarizing plate which is used as an analyzer of white LED light passing through the diffuser plate, the LC shutter, and the linear polarizing plate.

Measurement Arrangements and Equipments

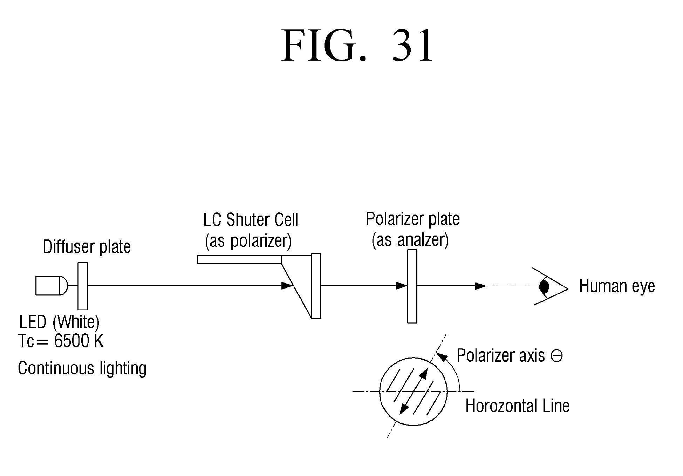

FIG. 31 is a view illustrating equipments for measuring.
The following equipments may be used:

1. Light Source: MSB-MX-25 (Dicon LED) or equivalent
2. Diffuser Plate: NT54-228 (Edmund Optics) or equivalent
3. Linear polarizer

**Conditions:**

Measuring conditions are as follows:

1. Shutter: Stop State
2. LED: Continuous Lighting
color white (Red, Green and Blue LEDs) color temp. = 6500K
Red (Main wavelength 635nm)
Green (Main wavelength 521nm)
Blue (Main wavelength 465nm)

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

**Claims**

1. A method for synchronizing of a display device, the method comprising:

   receiving a message from an eyeglass device and confirming the eyeglass device that is to perform synchronization based on a result of the receiving;
   transmitting transmission timing information of a beacon packet comprising a control signal of the eyeglass device to the eyeglass device; and
   transmitting the beacon packet to the eyeglass device according to the transmission timing information.

2. The method as claimed in claim 1, wherein the confirming the eyeglass device comprises:

   receiving an inquiry message from the eyeglass device;
   listening to the inquiry message and transmitting an EIR packet comprising a path loss threshold value;
   receiving an association notification packet requesting association from the eyeglass device based on a path loss value; and
   transmitting a baseband ACK to the eyeglass device in response to the association notification packet.

3. The method as claimed in claim 2, wherein the EIR packet comprises information of at least one of length-manufacturer specific, manufacturer specific, fixed ID, multicast capable, reserved, sending beacon, showroom mode, reserved remote pairable mode, test mode for Bluetooth qualification body test, path loss threshold value, length-TX power, TX power level, and TX power value.

4. The method as claimed in claim 2, wherein the path loss value is a difference between the TX power value and an RSSI value of the EIR.

5. The method as claimed in claim 2, wherein the association notification packet comprises information of at least one of glasses Bluetooth device (BD) address, device type, reserved, glasses version no., battery type, remaining battery voltage, battery charging status, remaining battery ratio, remaining battery time, and color shift.

6. The method as claimed in claim 1, wherein the transmitting the transmission timing information of the beacon packet comprises:

   transmitting a reconnect train packet comprising the transmission timing information of the beacon packet to the eyeglass device; and
   when the eyeglass device does not find the reconnect train packet within a predetermined time, receiving a page packet from the eyeglass device.

7. The method as claimed in claim 6, wherein the reconnect train packet is transmitted at a predetermined frequency and at predetermined time intervals without frequency hopping.

8. The method as claimed in claim 6, wherein, when the page packet is received, the reconnect train packet is transmitted to the eyeglass device again.

9. The method as claimed in claim 6, wherein the reconnect train packet comprises information of at least one of current BT clock, next beacon clock, AFH channel map, display BD address, beacon interval, and display ID.

10. The method as claimed in claim 1, wherein the beacon packet comprises information of at least one of BT clock at rising edge of frame sync, reserved, dual-view mode, BT clock phase at rising edge of frame sync, left shutter open offset (or) video stream 1 in dual-view mode, left shutter close offset (or) video stream 1 in dual-view mode, right shutter open offset (or) video stream 2 in dual-view mode, right shutter close offset (or) video stream 2 in dual-view mode, and frame sync period (integer)/frame sync period (fraction).

11. A method for synchronizing of an eyeglass device, the method comprising:

searching a display device to be synchronized and confirming the display device that is to perform synchronization according to a result of the searching;
receiving transmission timing information of a beacon packet comprising a control signal of the eyeglass device from the display device; and
receiving the beacon packet from the display device according to the transmission timing information.

12. The method as claimed in claim 11, wherein the confirming the display device comprises:

transmitting an inquiry message to the display device;
receiving an EIR packet comprising a path loss threshold value from the display device in response to the inquiry message;
transmitting an association notification packet requesting association with the display device to the display device according to a path loss value; and
receiving a basebandACK from the display device in response to the association notification packet.

13. The method as claimed in claim 12, wherein the transmitting the association notification packet comprises, only when the path loss value is less than the path loss threshold value, transmitting the association notification packet.

14. A method for synchronizing of a display device and an eyeglass device, the method comprising:

searching, by the eyeglass device, a display device to be synchronized, and associating with the searched display device;
transmitting, by the display device, transmission timing information of a beacon packet comprising a control signal of the eyeglass device to the eyeglass device; and
transmitting, by the display device, the beacon packet to the eyeglass device according to the transmission timing.

# FIG. 1

1000

100

3D Display
(TV or PC)

RF transceiver

RF Signals

200

RF transceiver

3DG

# FIG. 2

# FIG. 3

# FIG. 4

# FIG. 5

```
                    ( START )
                        │
                        ▼
    ┌────────────────────────────────────┐
    │   ASSOCIATE EYEGLASS DEVICE         │ ─── S510
    │      WITH DISPLAY DEVICE            │
    └────────────────────────────────────┘
                        │
                        ▼
    ┌────────────────────────────────────┐
    │   TRANSMIT, BY DISPLAY DEVICE,      │ ─── S520
    │ TRANSMISSION TIMING INFORMATION OF  │
    │ BEACON PACKET TO EYEGLASS DEVICE    │
    └────────────────────────────────────┘
                        │
                        ▼
    ┌────────────────────────────────────┐
    │      TRANSMIT, BY DISPLAY DEVICE,   │ ─── S530
    │  BEACON PACKET TO EYEGLASS DEVICE   │
    └────────────────────────────────────┘
                        │
                        ▼
                    ( END )
```

# FIG. 6

```
        ┌─────────────┐
        │    START    │
        └──────┬──────┘
               ↓
┌──────────────────────────────┐
│ ONFIRM EYEGLASS DEVICE TO     │ ～S610
│ PERFORM SYNCHRONIZATION       │
└──────────────┬───────────────┘
               ↓
┌──────────────────────────────┐
│ RECEIVE TRANSMISSION TIMING   │ ～S620
│ INFORMATION OF BEACON PACKET  │
└──────────────┬───────────────┘
               ↓
┌──────────────────────────────┐
│ RECEIVE BEACON PACKET         │ ～S630
│ FROM DISPLAY DEVICE           │
└──────────────┬───────────────┘
               ↓
        ┌─────────────┐
        │     END     │
        └─────────────┘
```

# FIG. 7

```
        ┌─────────────┐
        │    START    │
        └──────┬──────┘
               │
               ▼
   ┌───────────────────────────┐
   │ CONFIRM DISPLAY DEVICE TO │  ~S710
   │  PERFORM SYNCHRONIZATION  │
   └─────────────┬─────────────┘
                 │
                 ▼
   ┌───────────────────────────┐
   │ RANSMIT TRANSMISSION TIMING│  ~S720
   │ INFORMATION OF BEACON PACKET│
   └─────────────┬─────────────┘
                 │
                 ▼
   ┌───────────────────────────┐
   │   TRANSMIT BEACON PACKET  │  ~S730
   │     TO EYEGLASS DEVICE    │
   └─────────────┬─────────────┘
                 │
                 ▼
        ┌─────────────┐
        │     END     │
        └─────────────┘
```

# FIG. 8

# FIG. 9

```
         ┌─────────────┐
         │    START    │
         └──────┬──────┘
                ▼
┌──────────────────────────────┐
│   RECEIVE INQUIRY MESSAGE     │── S910
│    FROM EYEGLASS DEVICE       │
└──────────────┬───────────────┘
               ▼
┌──────────────────────────────┐
│  TRANSMIT EIR PACKET INCLUDING │── S920
│   PATH LOSS THRESHOLD VALUE    │
└──────────────┬───────────────┘
               ▼
┌──────────────────────────────┐
│ RECEIVE ASSOCIATION NOTIFICATION │── S930
│  PACKET FROM EYEGLASS DEVICE   │
└──────────────┬───────────────┘
               ▼
┌──────────────────────────────┐
│    TRANSMIT BASEBAND ACK TO    │── S940
│  EYEGLASS DEVICE IN RESPONSE TO │
│ ASSOCIATION NOTIFICATION PACKET │
└──────────────┬───────────────┘
               ▼
┌──────────────────────────────┐
│  TRANSMIT TRANSMISSION TIMING  │── S950
│  INFORMATION OF BEACON PACKET  │
└──────────────┬───────────────┘
               ▼
┌──────────────────────────────┐
│    TRANSMIT BEACON PACKET      │── S960
│      TO EYEGLASS DEVICE        │
└──────────────┬───────────────┘
               ▼
         ┌─────────────┐
         │     END     │
         └─────────────┘
```

# FIG. 10

START

RECEIVE INQUIRY MESSAGE
FROM EYEGLASS DEVICE — S1010

TRANSMIT EIR PACKET INCLUDING
PATH LOSS THRESHOLD VALUE — S1020

PATH LOSS VALUE<
PATH LOSS THRESHOLD
VALUE — S1030

N

Y

RECEIVE ASSOCIATION
NOTIFICATION FROM EYEGLASS DEVICE — S1040

TRANSMIT BASEBAND ACK TO
EYEGLASS DEVICE IN RESPONSE TO
ASSOCIATION NOTIFICATION PACKET — S1050

TRANSMIT TRANSMISSION TIMING
INFORMATION OF BEACON PACKET — S1060

TRANSMIT BEACON PACKET
TO EYEGLASS DEVICE — S1070

END

# FIG. 11

START

TRANSMIT INQUIRY MESSAGE
TO DISPLAY DEVICE — S1110

RECEIVE EIR PACKET INCLUDING PATH
LOSS VALUE FROM DISPLAY DEVICE — S1120

TRANSMIT ASSOCIATION NOTIFICATION
PACKET TO DISPLAY DEVICE — S1130

RECEIVE BASEBAND ACK FROM DISPLAY
DEVICE IN RESPONSE TO ASSOCIATION
NOTIFICATION PACKET — S1140

TRANSMIT TRANSMISSION TIMING
INFORMATION OF BEACON PACKET — S1150

TRANSMIT BEACON PACKET
TO EYEGLASS DEVICE — S1160

END

# FIG. 12

| 1 | 1 | 2 | 1 | 1 | 1 | 1 | 1 | 1 |
|---|---|---|---|---|---|---|---|---|
| Length - Manufacturer Specdific | Manufacturer Specific | Fixed ID | Reserved | Flags | Path Loss Threshold | Length - TX Power | TX Power Level | TX Power Value |
| LSB      MSB | LSB      MSB | LSB      MSB | LSB      MSB | LSB      MSB | LSB      MSB | LSB      MSB | LSB      MSB | LSB      MSB |

| Flags | | | | | | | |
|---|---|---|---|---|---|---|---|
| Bit[0] | Bit[1] | Bit[2] | Bit[3] | Bit[4] | Bit[5] | Bit[6] | Bit[7] |
| Multicast Capable | Reserved | Sending Beacon | Reserved (Remote Paired) | Showroom Mode | Reserved (Remote Pairable Mode) | Reserved | Test Mode |

EP 2 739 055 A1

# FIG. 13

EP 2 739 055 A1

| 6 | 1 | 1 | 1 | 1 | 1 | 2 | 4 |
|---|---|---|---|---|---|---|---|
| 3DG BD Address | Device Type | Reservec | | Remaining Battery Voltage | | Color Shift | Reserved |
| LSB    MSB | LSB    MSB | LSB    MSB | LSB    MSB | LSB    MSB | LSB    MSB | LSB    MSB | LSB    MSB |

| Bit[0:3] | Bit[4:7] |
|---|---|
| 3D Version No. | Battery Type |

| Bit[0:1] | Bit[2:4] | Bit[5:7] |
|---|---|---|
| Bettery Charging Status | Remaining Battery (Ratio) | Remaining Battery (Time) |

# FIG. 14

Bit 0                                               7                                           15

| $\triangle$ u' | S | $\triangle$ v' | S |

# FIG. 15

# FIG. 16

```
                    ┌─────────────┐
                    │    START    │
                    └──────┬──────┘
                           │
                           ▼
        ┌──────────────────────────────┐
        │  CONFIRM EYEGLASS DEVICE      │───S1610
        │  TO BE SYNCHRONIZED           │
        └──────────────┬───────────────┘
                       │
                       ▼
        ┌──────────────────────────────┐
        │  TRANSMIT RECONNECT TRAIN     │───S1620
        │  PACKET TO EYEGLASS DEVICE    │
        └──────────────┬───────────────┘
                       │
                       ▼
  S1640                 ◇
   ┌──────────────────┐  ╱ ╲
   │ RECEIVE PAGE     │◄─N  FIND RECONNECT  ───S1630
   │ PACKET           │    TRAIN PACKET?
   │ FROM EYEGLASS    │  ╲ ╱
   │ DEVICE           │   ◇
   └──────────────────┘   │ Y
                          ▼
        ┌──────────────────────────────┐
        │  TRANSMIT BEACON PACKET       │───S1650
        │  TO EYEGLASS DEVICE           │
        └──────────────┬───────────────┘
                       │
                       ▼
                ┌─────────────┐
                │     END     │
                └─────────────┘
```

# FIG. 17

| 4 | 4 | 10 | 6 | 2 | 1 | 1 |
|---|---|---|---|---|---|---|
| Current BT Clock | Next Beacon Clock | AFH Channel Map | 3D Display BD Address | Beacon interval | Version | Display ID |
| LSB     MSB | LSB     MSB | LSB     MSB | LSB     MSB | LSB     MSB | LSB     MSB | LSB     MSB |

# FIG. 18

```
┌──────────┐                                    ┌──────────┐
│    3D    │                                    │   3DG    │
│  Display │                                    │  Device  │
└──────────┘                                    └──────────┘
     │                                                │
     │───────────────── Beacon ──────────────────────▶│
     │                                                │
     │                                                │
     │───────────────── Beacon ──────────────────────▶│
     │                                                │
     │                                                │
     │───────────────── Beacon ──────────────────────▶│
     │                                                │
     │                                                │
```

# FIG. 19

| 4 | 2 | 2 | 2 | 2 | 2 | 2 | 1 |
|---|---|---|---|---|---|---|---|
| BT Clock at rising edge of Frame Sync | BT Clock phase at rising edge of Frame Sync | LS Open Offset | LS Close Offset | RS Open Offset | RS Close Offset | Frame Sync period (integer) | Frame Sync period (Fraction) |
| LSB    MSB | LSB    MSB | LSB    MSB | LSB    MSB | LSB    MSB | LSB    MSB | LSB    MSB | LSB    MSB |

| Bit[0:27] | Bit[28:29] | Bit[30] | Bit[31] |
|---|---|---|---|
| BT Clock at rising Edge of Frame Sync | Reserved | Dual-View Mode | Reserved |

EP 2 739 055 A1

# FIG. 20

Frame Sync

Left shutter open offset 900us

Left shutter close offset+100us

Right shutter open offset+900us

Right shutter close offset+100us

Nomalized Transmittanc (Left)

100%
50%
0%

Time

Nomalized Transmittanc (Right)

100%
50%
0%

Time

# FIG. 21

FIG. 22

# FIG. 23

case 3

Power on key > 3sec

Y

N

Register empty?

N

case 1

Y

Execute Association

case 2

Listen Reconnect train?

Listen Reconnect train?

Y

Y

Synchronized

Synchronized

# FIG. 24

# FIG. 25

Rising Edge of Frame Sync

$T_{CLOSE2}$

Close Shutter Offset+100us

$T_{CLOSE1}$

$T_{OPEN2}$

Open shutter Offset+900us

$T_{OPEN1}$

100%

60%

50%

5%

0%

# FIG. 26

Diffuser plate

LED(Green)

LC Shutter cell

Luminance meter

LED light output — Continuous lighting → t

Shutter transmittance → t

open close open close

Shutter OPEN

90%
60%
10%
5%
0%

10% to 90% →
5% to 60% →

$T_{r10-90}$
$T_{r5-60}$

$T_f$
90%→10%

EP 2 739 055 A1

# FIG. 27

Diffuser plate  LC Shutter cell  Luminance meter  Output= La

LED(Green)

LED light output — Switching on and off — 4ms — 4ms — t
Shutter transmittance — t
close open close open

Diffuser plate  LC Shutter cell  Luminance meter  Output= Lb

LED(Green)

LED light output — Switching on and off — 4ms — 4ms — t
Shutter transmittance — t
close open close open

# FIG. 28

# FIG. 29

Φ

Contrast ratio
of side view

LC Shutter Cell

Vertical axis

LC Shutter Cell

Luminance meter

Diffuser plate

LED(Green)

(Turning around vertical axis)

# FIG. 30

Diffuser plate    LC Shutter cell    Luminance meter

LED(White)
Tc=6500k

(ua',va')

LED light output    Continuous lighting → t

Shutter transmittance

open close open close

Diffuser plate

LED(White)
Tc=6500k

Luminance meter

(ub',vb')

LED light output    Continuous lighting → t

# FIG. 31

LC Shuter Cell
(as polarizer)

Polarizer plate
(as analzer)

Diffuser plate

Human eye

LED (White)
Tc = 6500 K
Continuous lighting

Polarizer axis ⊖

Horozontal Line

## INTERNATIONAL SEARCH REPORT

| | International application No. |
|---|---|
| | **PCT/KR2012/006061** |

### A. CLASSIFICATION OF SUBJECT MATTER

***H04N 13/00(2006.01)i***

According to International Patent Classification (IPC) or to both national classification and IPC

### B. FIELDS SEARCHED

Minimum documentation searched (classification system followed by classification symbols)
H04N 13/00; G02B 27/02; H04N 13/04

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: synchronization, 3D, beacon

### C. DOCUMENTS CONSIDERED TO BE RELEVANT

| Category* | Citation of document, with indication, where appropriate, of the relevant passages | Relevant to claim No. |
|---|---|---|
| A | KR 10-2011-0063934 A (SAMSUNG ELECTRONICS CO., LTD.) 15 June 2011<br>See abstract, claims (1-3,6), paragraphs (31-33), figure 2. | 1-14 |
| A | KR 10-2008-0109442 A (LG ELECTRONICS INC.) 17 December 2008<br>See abstract, claims (1-2), paragraphs (38-42), figure 2. | 1-14 |
| A | US 2011-0122238 A1 (HULVEY ROBERT W. et al.) 26 May 2011<br>See abstract. | 1-14 |

☐ Further documents are listed in the continuation of Box C.    ☒ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 17 DECEMBER 2012 (17.12.2012) | **18 DECEMBER 2012 (18.12.2012)** |

| Name and mailing address of the ISA/KR | Authorized officer |
|---|---|
| Korean Intellectual Property Office<br>Government Complex-Daejeon, 139 Seonsa-ro, Daejeon 302-701, Republic of Korea<br>Facsimile No. 82-42-472-7140 | Telephone No. |

Form PCT/ISA/210 (second sheet) (July 2009)

**INTERNATIONAL SEARCH REPORT**
Information on patent family members

International application No.

**PCT/KR2012/006061**

| Patent document cited in search report | Publication date | Patent family member | Publication date |
|---|---|---|---|
| KR 10-2011-0063934 A | 15.06.2011 | NONE | |
| KR 10-2008-0109442 A | 17.12.2008 | NONE | |
| US 2011-0122238 A1 | 26.05.2011 | CN 102209247 A | 05.10.2011 |
| | | EP 2326097 A2 | 25.05.2011 |
| | | US 2011-0122237 A1 | 26.05.2011 |
| | | US 2011-0134231 A1 | 09.06.2011 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 2012006061 W

- US 61512992 A